# EUROPEAN PATENT SPECIFICATION

(11) **EP 3 777 333 B1**
(45) Date of publication and mention of the grant of the patent: **09.08.2023**
(21) Application number: 19722710.1
(22) Date of filing: 04.04.2019
(51) Int. Cl.: H04W 48/12, G01S 5/00, H04W 64/00

(54) **A NETWORK NODE, A LOCATION SERVER, A WIRELESS DEVICE AND METHODS THEREIN FOR TRANSMISSION AND RECEPTION OF POSITIONING ASSISTANCE DATA**
NETZWERKKNOTEN, STANDORTSERVER, DRAHTLOSE VORRICHTUNG UND VERFAHREN DARIN ZUM SENDEN UND EMPFANGEN VON POSITIONIERUNGSASSISTENZDATEN
NOEUD DE RESEAU, SERVEUR DE LOCALISATION, DISPOSITIF SANS FIL ET PROCEDES ASSOCIES POUR LA TRANSMISSION ET LA RECEPTION DE DONNEES D'AIDER LA LOCALISATION

(30) Priority: 05.04.2018 US 201862652914 P
(43) Date of publication of application: 17.02.2021
(73) Proprietor: TELEFONAKTIEBOLAGET LM ERICSSON (PUBL), 164 83 Stockholm (SE)
(72) Inventor: SHREEVASTAV, Ritesh, 194 47 Upplands Väsby (SE); PALM, Håkan, 352 61 Växjö (SE); CUI, Tao, 194 68 Upplands Väsby (SE); GUNNARSSON, Fredrik, 587 50 Linköping (SE); MODARRES RAZAVI, Sara, 583 32 Linköping (SE); BERGSTRÖM, Mattias, 192 70 Sollentuna (SE); EKEMARK, Sven, 743 40 Storvreta (SE)
(74) Representative: Ericsson
(86) International application number: PCT/SE2019/050310
(87) International publication number: WO 2019/194736

(56) References cited:
- US-A1- 2010 099 425
- US-A1- 2015 011 213
- QUALCOMM INCORPORATED: "Further Details on Broadcast of Assistance Data", 3GPP DRAFT; R2-1803394_(BROADCAST_AD), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20180226 - 20180302 16 February 2018 (2018-02-16), XP051400490, Retrieved from the Internet: URL:http://www.3gpp.org/ftp/tsg%5Fran/WG2% 5FRL2/TSGR2%5F101/Docs/ [retrieved on 2018-02-16]
- ZTE ET AL: "Consideration on the stored other SI", 3GPP DRAFT; R2-1702842 CONSIDERATION ON THE STORED OTHER SI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 - 20170407 3 April 2017 (2017-04-03), XP051244826, Retrieved from the Internet: URL:http://www.3gpp.org/ftp/Meetings_3GPP_ SYNC/RAN2/Docs/ [retrieved on 2017-04-03]
- "3rd Generation Partnership Project; Technical Specification Group Radio Access Network; Functional stage 2 description of Location Services (LCS) in GERAN (Release 13)", 3GPP STANDARD ; TECHNICAL SPECIFICATION ; 3GPP TS 43.059, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG6, no. V13.3.0, 25 September 2017 (2017-09-25), pages 1-71, XP051337246,
- ERICSSON: "Positioning assistance data segmentation and grouping", 3GPP DRAFT; R2-1805255- SIB DESIGN DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Sanya, China; 20180416 - 20180420 6 April 2018 (2018-04-06), XP051415945, Retrieved from the Internet: URL:http://www.3gpp.org/ftp/tsg%5Fran/WG2% 5FRL2/TSGR2%5F101bis/Docs/ [retrieved on 2018-04-06]

## Description

The invention relates to the reception of position assistance data.

### BACKGROUND

In a typical wireless communication network, wireless devices, also known as wireless communication devices, mobile stations, stations (STAs) and/or User Equipments (UEs), communicate via a Local Area Network (LAN) such as a WiFi network or a Radio Access Network (RAN) to one or more Core Networks (CNs). The RAN covers a geographical area which is divided into service areas or cell areas, which may also be referred to as a beam or a beam group, with each service area or cell area being served by a radio network node such as a radio access node e.g., a Wi-Fi access point or a Radio Base Station (RBS), which in some networks may also be denoted, for example, a NodeB, eNodeB (eNB), or gNB as denoted in 5G. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a Fifth Generation (5G) network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques can significantly increase the data rates and reliability of a wireless communication system. The performance is in particular improved if both the transmitter and the receiver are equipped with multiple antennas, which results in a

Multiple-Input Multiple-Output (MIMO) communication channel. Such systems and/or related techniques are commonly referred to as MIMO.

In addition to faster peak Internet connection speeds, 5G planning aims at higher capacity than current 4G, allowing higher number of mobile broadband users per area unit, and allowing consumption of higher or unlimited data quantities in gigabyte per month and user. This would make it feasible for a large portion of the population to stream high-definition media many hours per day with their mobile devices, when out of reach of Wi-Fi hotspots. 5G research and development also aims at improved support of machine to machine communication, also known as the Internet of things, aiming at lower cost, lower battery consumption and lower latency than 4G equipment.

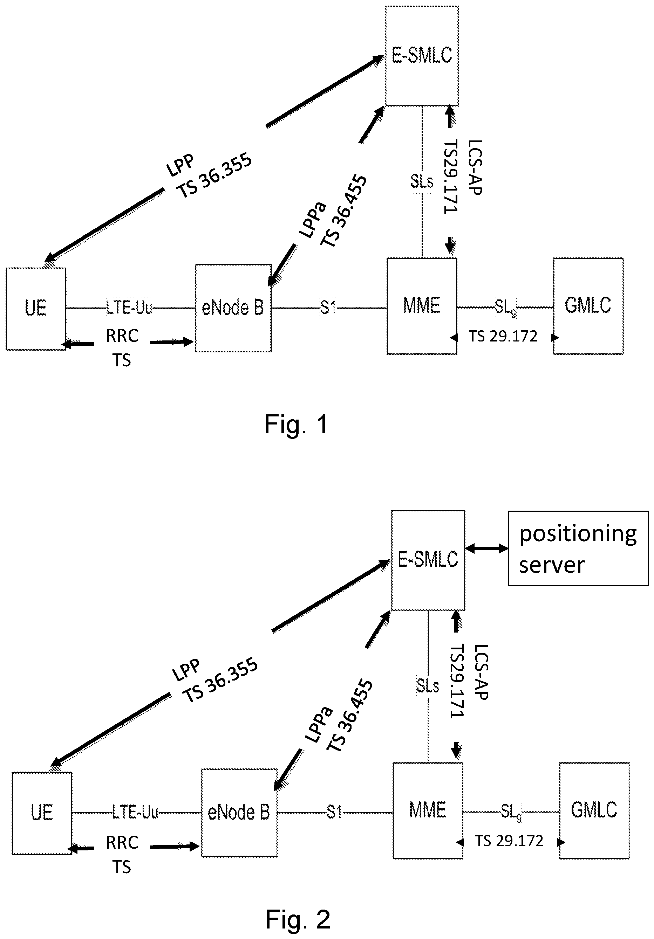

Positioning in an LTE communications network is supported by the architecture schematically illustrated in Figure 1, with direct interactions between a UE and a location server, e.g. an Enhanced Serving Mobile Location Center (E-SMLC), via the LTE Positioning Protocol (LPP). Moreover, there are also interactions between the location server and an eNodeB via the LPPa protocol, to some extent supported by interactions between the eNodeB and the UE via the Radio Resource Control (RRC) protocol.

UE positioning is recognized as an important feature for LTE networks due to its potential for massive commercial applications (for example intelligent transportation, entertainment, industry automation, robotics, remote operation, healthcare, smart parking and so on) as well as its relevance to US FCC E911 requirements.

The LTE networks have support for a wide range of positioning methods. The Global Navigation Satellites System (GNSS) is one of the widely used positioning methods. The GNSS may be of different types depending primarily on the country which supports/operates it. In the US, the GNSS system is termed as Global Positioning System (GPS), in Russia it is referred to as "GLObal NAvigation Satellite System (GLONASS), in the E.U. it is GALELIO and in China it is COMPASS. The GNSS system is based upon a Satellite navigation system. The Satellite is orbiting around the Earth's surface. The signal's coming from the satellite has to go through the ionosphere, the troposphere and there is some Earth's orbital error occurring too. Thus, the GNSS data that is received by the Rover (e.g. the UE) could be error prone. To mitigate such error, a Real Time Kinematics (RTK) mechanism is used.

3GPP submission document R2-1803394 presents a teaching relating to broadcasting of positioning assistance data. The document discloses that the scheduling information in SIB1 allows a UE to find the SI message to read the actual SIBs in it. For the proposed Positioning SIB Types, a new scheduling info can be defined, wherein the positioning scheduling info also could include a flag to indicate whether the Positioning SIB Type is ciphered or not which avoids that the UE reads a ciphered Positioning SIB without the required ciphering keys stored.

US 2010/1099425 A1 discloses a method for receiving, by a mobile terminal, from a base station, a block of first system information and a plurality of blocks of second system information wherein one of the plurality of blocks of the second system information including scheduling information. The scheduling information is for receiving a first plurality of blocks of second system information other than the one of the plurality of blocks of second system information including the scheduling information.

US 2015/011213 A1 discloses a method, for selectively reading system information.

The method comprises reading system information broadcast by a first cell, wherein system information read from the first cell comprises cell group information identifying the first cell as a member of a cell group and identifying one or more further member cells of the cell group. The method further teaches to transition from the first cell to a second cell. The method further comprises to determine, based at least in part on the cell group information, that the second cell is also a member of the cell group. In response to determining that the second cell is also a member of the cell group, the method teaches to selectively read only a portion of system information broadcast by the second cell that is comprised of system information that is different from the system information read from the first cell.

3GPP submission document R2-1702842 discloses broadcasting some kind of index/identifier in minimum SI to enable the UE to avoid re-acquisition of already stored SI-block(s)/SI message(s). The index/identifier and associated system information can be applicable in more than one cell. System information valid in one cell may be valid also in other cells.

### SUMMARY

As a part of developing embodiments herein a problem will first be identified and discussed.

Recent enhancements in the GNSS technology comprise the RTK GNSS, which is a differential GNSS positioning technology that enables positioning accuracy improvement from meter level to decimeter level or even to centimeter level in the right conditions in real-time by exploiting the carrier phase of the GNSS signal rather than only the code phase. Support for the RTK GNSS in the LTE networks should therefore be provided and are under standardization in the Release 15 work item. The support for the RTK in the LTE networks comprises reporting RTK correction data to the UE. Thereby, GNSS correction data is provided to the UE. The RTK correction data is sometimes in this disclosure referred to as RTK assistance data, positioning assistance data or just positioning data or RTK data. Further, it should be understood that the terms may be used interchangeably.

Two versions of reporting RTK data to the UE may be provided.

A first method is to broadcast the information, e.g. the RTK data, by extending the system information broadcast (SIB). This information is sometimes in this disclosure referred to as positioning information. In this first method, a radio network node, e.g. the eNodeB, receives the information from the location server and broadcasts the information. Thus, in the first method, the information is sent to the UE from the location server via the radio network node.

A second method is to send the information, e.g. the RTK data, to each UE individually, for example via the LPP. Thus, in the second method, the location server sends the information to the UE in a unicast fashion.

In both the first and second methods, it is the location server that interacts with an external positioning server, e.g. an RTK server, as illustrated in Figure 2. For example, the location server may interact with the positioning server over a communications interface, such as an Internet Protocol (IP) interface.

Some embodiments disclosed herein relate to the first method, wherein the positioning information, e.g. the RTK data, is sent to the UE from the location server via the radio network node. The RTK data is sometimes in this disclosure referred to as RTK assistance data or RTK correction data, and the terms are used interchangeably in this disclosure.

Currently, no SIB exists to transfer the RTK Assistance Data (RTK AD) to the UE. The number of SIBs needed to transfer the RTK correction data would be in the range from 5 to 20 SIBs. Additionally, to support other positioning methods such as positioning based on Observed Time Difference Of Arrival (OTDOA), one or more additional new SIBs may be required. Therefore, the positioning broadcast information SIBs addition can't follow the previous way of SIB introduction due to the large size of assistance data, due to many different types of assistance data and also due to different periodicity level of each type of data.

An object of embodiments herein is therefore to improve the performance of a wireless communications network for delivering of positioning assistance data, e.g. RTK data, to a wireless device, e.g. the UE, operating in the wireless communications network.

One objective for the LTE Rel15 accurate positioning work item is to specify a new SIB to support broadcast of assistance data:
- Broadcasting of assistance data [RAN2, RAN3, SA3, SA2]
- Specify a new SIB to support signalling of positioning assistance information for A-GNSS, RTK and UE-based OTDOA assistance information.
- Specify optional encryption procedure for broadcast assistance data, including mechanism for delivery of UE-specific encryption keys.

The above-stated objects are achieved with a method performed by a wireless device in accordance with claim 1 and with a corresponding wireless device in accordance with claim 3.

### BRIEF DESCRIPTION OF THE DRAWINGS

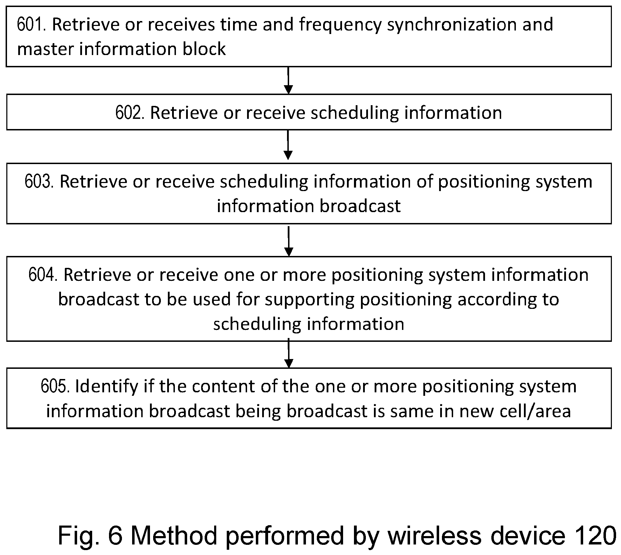

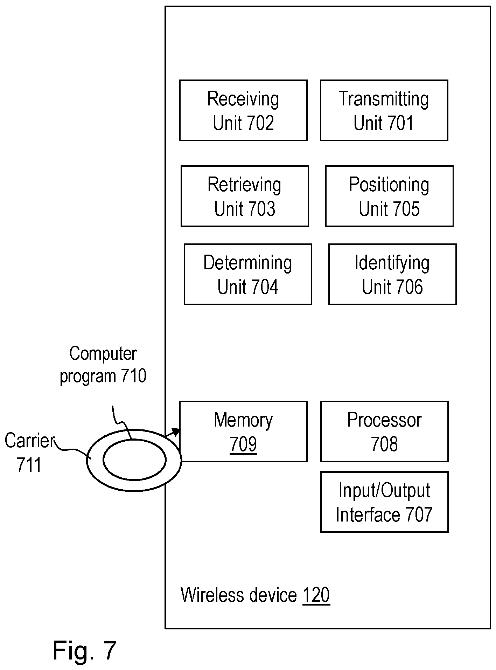

The invention is shown in the embodiments of Figures 6 and 7.

Any further references to "embodiments" in the following are to be understood as examples useful for understanding the invention.

Examplesef herein are described in more detail with reference to attached drawings in which:
- **Figure 1**: is a schematic block diagram illustrating an LTE communications network supporting positioning according to prior art;
- **Figure 2**: is a schematic block diagram of a wireless communications network;
- **Figure 3**: is a schematic block diagram of a wireless communications network;
- **Figures 4A and 4B**: are flowcharts depicting methods in a network node;
- **Figure 5**: is schematic block diagram illustrating a network node
- **Figure 6**: is a flowchart depicting embodiments of a method in a wireless device;
- **Figure 7**: is schematic block diagram illustrating embodiments of a wireless device;
- **Figure 8**: is a flowchart depicting a method in a location server
- **Figure 9**: is schematic block diagram illustrating a location server
- **Figure 10**: is a flowchart depicting a method in a positioning server
- **Figure 11**: is schematic block diagram illustrating a positioning server
- **Figure 12**: schematically illustrates a container SIB SIBXX comprising a number of positioning SIBs SIBXX.1-SIBXX.n and a scheduling SIB SIBYY comprising scheduling information for a number of positioning SIBs SIBXX.1-SIBXX.n;
- **Figure 13**: schematically illustrates legacy scheduling and the new enhanced scheduling;
- **Figure 14**: schematically illustrates a telecommunication network connected via an intermediate network to a host computer;
- **Figure 15**: is a generalized block diagram of a host computer communicating via a base station with a user equipment over a partially wireless connection; and
- **Figures 16-19**: are flowcharts illustrating methods implemented in a communication system including a host computer, a base station and a user equipment.

### DETAILED DESCRIPTION

Embodiments herein may refer to GNSS, RTK, Positioning, SIBs.

According to some embodiments disclosed herein, a new SIB is defined which is decoupled from the legacy SIB structure. The new SIB is sometimes in this disclosure referred to as a positioning SIB, and the terms may be used interchangeably. Positioning SIBs are defined as separate SIBs which do not interfere with the legacy SIB design. A new SIB structure has been defined which independently defines the new positioning SIB and provides an easy future extension mechanism. By the term "legacy" when used in this disclosure is meant already defined modus operandi for SIB definition and broadcast. Further, by the expression "legacy SIB definition" when used herein is meant the existing SIBs in the 36.331 specification. When a new SIB is needed to be defined in the RRC specification, the common practice is that the next SIB number is taken, and the broadcast information is defined for that SIB. However, as the RTK assistance data/information contains many SIBs, taking the previous procedure may not be suitable.

Embodiments herein relate to RRC signaling and SIB formulation, which would impact the 36.331 RAN2 specifications.

Embodiments herein are mostly exemplified with LTE wireless devices but it may be applicable to other wireless devices which are served by other Radio Access Technologies such as LTE category M (CAT-M), NB-loT, WiFi, or New Radio (NR) Carriers.

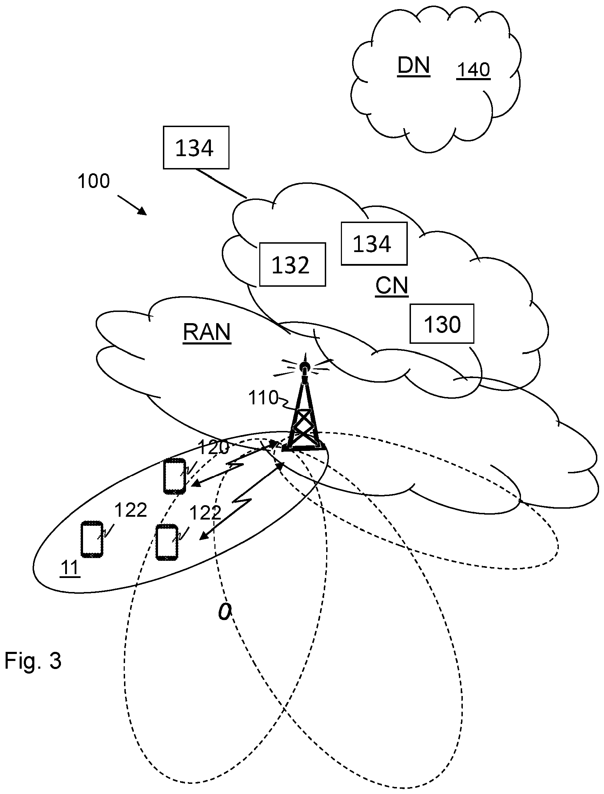

Embodiments herein relate to wireless communication networks in general. Figure **3** is a schematic overview depicting **a wireless communications network 100**. The wireless communications network 100 may be referred to as a radio communications network. The wireless communications network 100 comprises one or more Radio Access Networks (RANs) and one or more Core Networks (CNs). The radio communications network 100 may use a number of different technologies, such as NB-loT, CAT-M, Wi-Fi, eMTC, Long Term Evolution (LTE), LTE-Advanced, 5G, New Radio (NR), Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Sometimes in this disclosure the wireless communications network 100 is referred to as just a network.

In the wireless communication network 100, wireless devices e.g. **a wireless device 120** also referred to as the first UE 120, is operating in the wireless communications network 100. One or more further wireless devices 122 also referred to as one or more second UEs 122 may operate in the wireless communications network 100. As schematically illustrated in Figure 3, the wireless device 120,122 may communicate with a network node, e.g. a network node 110 which will be described below.

The wireless devices 120, 122 may each e.g. be a mobile station, a non-Access Point (non-AP) STA, a STA, a user equipment and/or a wireless terminals, an NB-loT device, an enhanced Machine-Type Communication (eMTC) device and a Category M (CAT-M) device, a WiFi device, an LTE device and an NR device communicate via one or more Access Networks (AN), e.g. RAN, to one or more Core Networks (CN). It should be understood by the skilled in the art that "wireless device" is a non-limiting term which means any terminal, wireless communication terminal, user equipment, Device to Device (D2D) terminal, or node e.g. smart phone, laptop, mobile phone, sensor, relay, mobile tablets or even a small base station communicating within a cell.

Network nodes operate in the radio communications network 100, such as a **network node 110** also referred to as the first network node 110, providing radio coverage over a geographical area, **a service area 11**, which may also be referred to as a cell, a beam or a beam group of a first Radio Access Technology (RAT), such as 5G, LTE, Wi-Fi, NB-loT, CAT-M, Wi-Fi, eMTC or similar. The network node 110 may be a transmission and reception point e.g. a radio access network node such as a Wireless Local Area Network (WLAN) access point or an Access Point Station (AP STA), an access controller, a base station, e.g. a radio base station such as a NodeB, an evolved Node B (eNB, eNode B), a gNB, a base transceiver station, a radio remote unit, an Access Point Base Station, a base station router, a transmission arrangement of a radio base station, a stand-alone access point or any other network unit capable of communicating with a wireless device within the service area served by the network node 110 depending e.g. on the radio access technology and terminology used. The network node 110 may be referred to as a serving radio network node and communicates with the wireless device 120, 122 with Downlink (DL) transmissions to the wireless device 120, 122 and Uplink (UL) transmissions from the wireless device 120, 122.

Further network nodes operate in the radio communications network 100, such as a **network node 130** also referred to as the second network node 130. The network node 130 may be an MME which is a control node for an LTE access network, a Serving Gateway (SGW), and a Packet Data Network Gateway (PGW). An MME is amongst other responsible for tracking and paging procedure including retransmissions. Further, the network node 130 may be an Operation And Maintenance (OAM) node such as an OSS-RC (Operation and Support System Radio and Core (OSS-RC) node or an Ericsson Network Management (ENM) node.

**A location server 132** and **a positioning server 134** operate in the radio communications network 100. For example, the location server 132 may be an E-SMLC and the positioning server 134 may be an RTK server. The location server 132 and the positioning server 134 may communication with each other over a communications interface.

It should be understood that the positioning server 134 may be arranged external of the radio communications network 100 and in such a scenario the positioning server 134 may be referred to as an external positioning server 134, and the location server 132 and the positioning server 134 may communicate over an IP interface.

The positioning server 134 may sometimes herein be referred to as an RTK server or an RTK network provider.

Methods according to embodiments herein may be performed by any of the network node 110 such as e.g. an eNB, the wireless device 120, e.g. the UE, the location server 132 and/or by the positioning server 134. As an alternative, a Distributed Node (DN) and functionality, e.g. comprised in a **cloud 140** as shown in Figure 3 may be used for performing or partly performing the methods.

### Actions of some embodiments herein

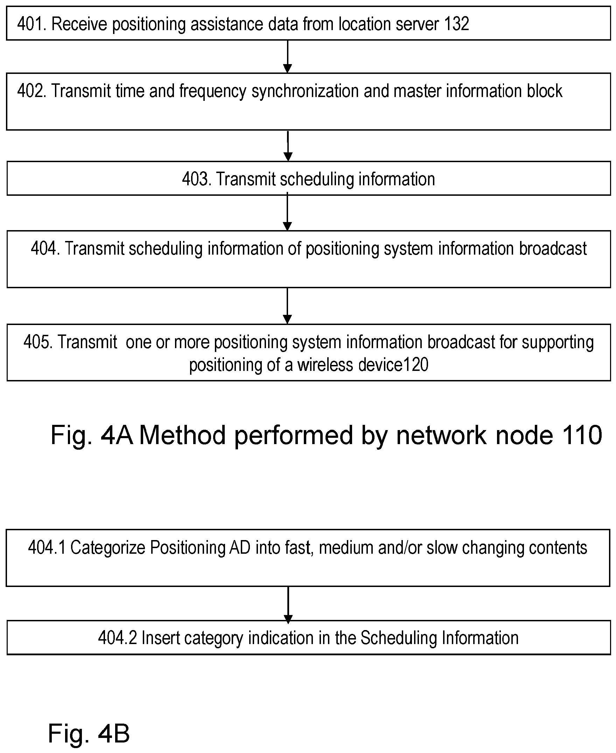

Example embodiments of a flowchart depicting embodiments of **a method performed by the network node 110**, e.g. the eNB, to transmit positioning assistance data to the wireless device 120 is depicted in **Figures 4A and 4B** and will be described more in detail in the following. The method may comprise one or more of the following actions which actions may be taken in any suitable order. Further, it should be understood that one or more actions may be optional and that actions may be combined.

As previously mentioned, the network node 110 and the wireless device 120 operate in the wireless communications network 100.

In **Action 401,** the network node 110, e.g. the eNB, receives, e.g. from the location server 132, the positioning assistance data. As will be described below, the positioning assistance data may be determined by the location server 132 based on OTDOA information transmitted from the network node 110 and received by the location server 132, or the positioning assistance data may be determined by the location server 132 based on satellite correction information received from the positioning sever 134.

The network node 110 may associate the positioning assistance data of one or more positioning SIBs with a respective indication, wherein same positioning assistance data are associated with same respective indication.

In some embodiments, the indication indicates a fast-changing positioning SIB comprising fast-changing positioning assistance data and indicates an update rate corresponding to a SIB periodicity.

For example, the indication may be a value tag indicating at least one out of:
- a change rate of the positioning assistance data;
- a change in the positioning assistance data; and
- a change in an encryption key for the associated positioning SIB.

In some embodiments, the indication is given by a presence of a value tag in the one or more positioning SIBs and wherein the value tag indicates an update rate of the SIB.

Further, the indication may be given by an absence of a value tag in the one or more positioning SIBs indicating that the one or more positioning SIBs is a fast-changing SIB and that the update rate of the SIB is equal to a SIB periodicity.

The valueTag is a tag used to identify whether or not any positioning SIB contents, i.e. positioning assistance data, have been modified.

In **action 402,** the network node 110, e.g. the eNB, transmits, e.g. to the wireless device 120, time and frequency synchronization and master information block. Thereby, the wireless device 120 and the network node 110 may synchronize to each other.

In **action 403**, the network node 110, e.g. the eNB, transmits, e.g. to the wireless device 120, scheduling information. The scheduling information may comprise information about radio resources that provides scheduling information of positioning system information broadcast, different from scheduling information of non-positioning system information broadcast. Thereby, the positioning SIBs will not be transmitted on same resources as non-positioning SIBs. The positioning system information broadcast is sometimes herein referred to as positioning SIB or new SIB, and the terms may be used interchangeably. Further, the positioning SIB comprises the positioning assistance data.

In **action 404**, the network node 110, e.g. the eNB, transmits, e.g. to the wireless device 120, scheduling information of positioning system information broadcast. Thus, the network node 110 uses the radio resources for transmitting scheduling information of the positioning SIB to the wireless device 120.

In sub actions 404.1, the network node 110, e.g. the eNB categorizes the Positioning Assistance Data into fast, medium and/or slow changing contents. Thus, the network node 110 categorizes the positioning assistance data in dependence of the change rate of its contents. This may also be expressed as the positioning SIB comprising the positioning assistance data is a fast, medium or slow changing SIB depending on the change rate of the comprised positioning assistance data.

As will be described in more detail below, in some embodiments the positioning assistance data of the one or more positioning SIBs are associated with a respective indication. This will be described in more detail in e.g. sections 5.7 and 5.9 below.

In some embodiments, wherein the network node 110 categorizes positioning assistance data in dependence of its change rate, the indication may indicate a categorization of the positioning assistance data in dependence of its change rate.

The indication may be configured to indicate a fast-changing positioning SIB comprising fast-changing positioning assistance data and to indicate an update rate corresponding to a SIB periodicity.

For example the indication may be a value tag indicating at least one out of:
- a change rate of the positioning assistance data;
- a change in the positioning assistance data; and
- a change in an encryption key for the associated positioning SIB.

In some embodiments, the indication is given by a presence of a value tag in the one or more positioning SIBs and wherein the value tag indicates an update rate of the SIB.

Alternatively, in some embodiments, the indication is given by an absence of a value tag in the one or more positioning SIBs indicating that the one or more positioning SIBs is a fast-changing SIB and that the update rate of the SIB is equal to a SIB periodicity.

In sub action 404.2, the network node 110, e.g. the eNB, inserts an indication of or relating to the categorization in the scheduling information.

In **action 405**, the network node 110, e.g. the eNB, transmits, e.g. to the wireless device 120, one or more positioning system information broadcast for supporting positioning of a wireless device 120. Thus, the network node 110 transmits, to the wireless device 120 and in accordance with the transmitted scheduling information of the positioning SIB, one or more positioning SIBs comprising positioning assistance data.

The determination of the position of the wireless device 120 is supported by means of the positioning assistance data comprised in the one or more positioning system information broadcast. The wireless device 120 determines its position by taking one or more of the positioning system information broadcasts into account in addition to the result of one or more GNSS measurements performed by the wireless device 120.

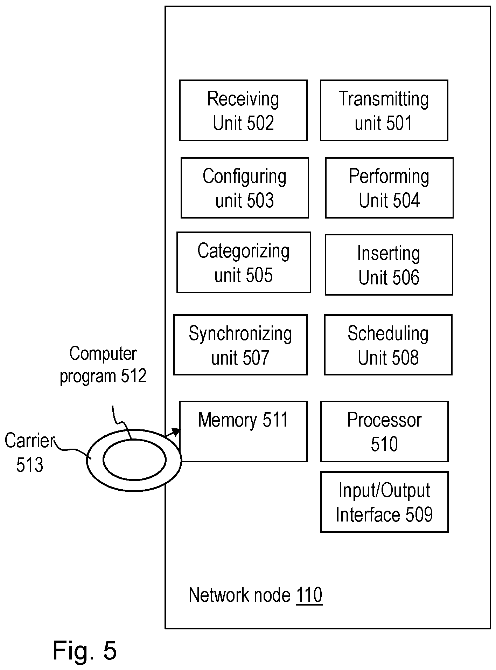

To perform the method actions e.g. for transmitting positioning assistance data to the wireless device 120, the network node 110 may comprise the arrangement depicted in **Figure 5**. The network node 110 may e.g. comprise a **transmitting unit 501**, **a receiving unit 502**, **a configuring unit 503**, **a performing unit 504**, **a categorizing unit 505**, **an inserting unit 506**, **a synchronizing unit 507**, and **a scheduling unit 508**.

As previously mentioned the network node 110 and the wireless device 120 are configured to operate in the wireless communications network 100.

The network node 110 may be configured to transmit, e.g. by means of the transmitting unit 501, a signal, message or information to one or more nodes operating in the communications network 100. The transmitting unit 501 may be implemented by or arranged in communication with a **processor 510** of the network node 110. The processor 510 will be described in more detail below.

The network node 110 is configured to transmit, to the wireless device 120, scheduling information comprising information about radio resources that are to provide scheduling information of a positioning SIB, which scheduling information is different from scheduling information of non-positioning SIB.

Further, the network node 110 is configured to transmit, using the radio resources, scheduling information of the positioning SIB to the wireless device 120.

Furthermore, the network node 110 is configured to transmit, to the wireless device 120 and in accordance with the transmitted scheduling information of the positioning SIB, one or more positioning SIBs comprising positioning assistance data.

In some embodiments, the network node 110 is configured to associate the positioning assistance data of one or more positioning SIBs with a respective indication, wherein same positioning assistance data are associated with same respective indication.

The indication may be configured to indicate a fast-changing positioning SIB comprising fast-changing positioning assistance data and to indicate an update rate corresponding to a SIB periodicity.

For example the indication may be a value tag indicating at least one out of:
- a change rate of the positioning assistance data;
- a change in the positioning assistance data; and
- a change in an encryption key for the associated positioning SIB.

In some embodiments, the indication is given by a presence of a value tag in the one or more positioning SIBs and wherein the value tag indicates an update rate of the SIB.

Alternatively, in some embodiments, the indication is given by an absence of a value tag in the one or more positioning SIBs indicating that the one or more positioning SIBs is a fast-changing SIB and that the update rate of the SIB is equal to a SIB periodicity.

The network node 110 is configured to receive, e.g. by means of the receiving unit 502, a signal, message or information from one or more nodes operating in the communications network 100.

The receiving unit 502 may be implemented by or arranged in communication with the processor 510.

In some embodiments, the network node 110 receives positioning assistance data from the location server 132 operating in the wireless communications network 100.

The network node 110 may be configured to configure, e.g. by means of the configuring unit 503, the wireless device 120.

The configuring unit 503 may be implemented by or arranged in communication with the processor 510.

The network node 110 may be configured to perform, e.g. by means of the performing unit 504, one or more measurements and/or one or more determinations.

The performing unit 504 may be implemented by or arranged in communication with the processor 510.

The network node 110 may be configured to categorize, e.g. by means of the categorizing unit 505, categorize positioning assistance data.

The categorizing unit 505 may be implemented by or arranged in communication with the processor 510.

The network node 110 may be configured to categorize positioning assistance data in dependence of its change rate. In such embodiments, the indication is configured to indicate a categorization of the positioning assistance data in dependence of its change rate.

The network node 110 may be configured to insert, e.g. by means of the inserting unit 506, the indication or the identifier of the positioning assistance data in the scheduling information.

The inserting unit 506 may be implemented by or arranged in communication with the processor 510.

The network node 110 may be configured to synchronize, e.g. by means of the synchronizing unit 507, with the wireless device 120.

The synchronizing unit 507 may be implemented by or arranged in communication with the processor 510.

The network node 110 may be configured to schedule, e.g. by means of the scheduling unit 508, scheduling information and/or positioning SIBs.

The scheduling unit 508 may be implemented by or arranged in communication with the processor 510.

Those skilled in the art will also appreciate that the units in the network node 110 described above may refer to a combination of analog and digital circuits, and/or one or more processors configured with software and/or firmware, e.g. stored in the network node 110 that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a System-on-a-Chip (SoC).

The network node 110 may comprise **an input and output interface 509** configured to communicate with one or more out of the wireless device 120, 122, the network node 130, and the location server 132. The input and output interface may comprise a wireless receiver (not shown) and a wireless transmitter (not shown).

The embodiments herein may be implemented through a respective processor or one or more processors, such as the **processor 510** of a processing circuitry in network node 110 depicted in Figure 5, together with respective computer program code for performing functions and actions of the embodiments herein. The program code mentioned above may also be provided as a computer program product, for instance in the form of a data carrier carrying computer program code for performing the embodiments herein when being loaded into the network node 110. One such carrier may be in the form of a CD ROM disc. It is however feasible with other data carriers such as a memory stick. The computer program code may furthermore be provided as pure program code on a server and downloaded to the network node 110.

The network node 110 may further comprise a **memory 511** comprising one or more memory units. The memory comprises instructions executable by the processor in the network node 110.

The memory is arranged to be used to store e.g. data, configurations, and applications to perform the methods herein when being executed in the network node 110. For example, the memory may comprise the buffer having the buffer size referred to herein.

Example embodiments of a flowchart depicting embodiments of **a method performed by the wireless device 120**, to receive positioning assistance data, is depicted in **Figure 6** and will be described more in detail in the following. The method comprises the following actions.

In **action 601**, the wireless device 120 retrieves or receives, e.g. from the network node 110, time and frequency synchronization and master information block. Based on this information, the wireless device 120 may synchronize with the network node 110.

In **action 602**, the wireless device 120 retrieves or receives, e.g. from the network node 110, scheduling information. The scheduling information comprises information about radio resources that provides scheduling information of positioning system information broadcast, different from scheduling information of non-positioning system information broadcast. The non-positioning system information broadcast is sometimes in this disclosure referred to as legacy SIB and it should be understood that the terms may be used interchangeably. Thus, the wireless device 120 receives, from the network node 110, scheduling information comprising information about radio resources that are to provide scheduling information of a positioning SIB. The received scheduling information is different from scheduling information of non-positioning SIB. Thereby, the positioning SIBs will not be transmitted on same resources as non-positioning SIBs.

In **action 603,** the wireless device 120 retrieves or receives, e.g. from the network node 110, scheduling information of positioning system information broadcast. The wireless device 20 uses the radio resources mentioned in action 602 for receiving the scheduling information of the positioning SIB.

In **action 604,** the wireless device 120 retrieves or receives, e.g. from the network node 110, one or more positioning system information broadcast to be used for supporting positioning according to scheduling information. Based on the positioning assistance data comprised in the one or more positioning system information broadcast, the position of the wireless device 120 may be determined. The one or more positioning system information broadcast comprise one or more of the new SIBs, e.g. one or more of the positioning SIBs, which will be described in more detail below. In other words, the wireless device 120 receives, from the network node 110 and in accordance with the received scheduling information of the positioning SIB, one or more positioning SIBs comprising positioning assistance data.

The positioning assistance data of the one or more positioning SIBs are associated with a respective indication. This will be described in more detail in e.g. sections 5.7 and 5.9 below.

The indication indicates example, a categorization of the positioning assistance data in dependence of its change rate.

In some embodiments, the indication indicates a fast-changing positioning SIB comprising fast-changing positioning assistance data and indicates an update rate corresponding to a SIB periodicity.

In some cases, the indication is a value tag indicating at least one out of:
- a change rate of the positioning assistance data;
- a change in the positioning assistance data; and
- a change in an encryption key for the associated positioning SIB.

The indication may given by a presence of a value tag in the one or more received positioning SIBs and in such case the wireless device 120 may be configured to determine an update rate of the SIB based on the value tag.

In some cases, wherein the indication is given by an absence of a value tag in the one or more received positioning SIBs, the wireless device 120 determines the one or more received positioning SIBs to be a fast-changing SIB and determines the update rate of the SIB to be equal to a SIB periodicity.

It should be understood that actions 602 and 603 may comprise different subactions depending on which one out of three alternative methods to define the new positioning SIBs is used. The three alternative methods to define the new positioning SIBs are referred to as alternatives a, b and c, and will be described in more detail below.

In **action 605**, the wireless device 120 determines or identifies whether the content of the received one or more positioning system information broadcast is the same in new cell or new area. Thus, the wireless device 120 determines or identifies if the content being broadcast is the same in new cell or new area as in old cell or old area. In other words, the wireless device 120 determines whether or not the positioning assistance data of the received one or more positioning SIBs is same in a second cell as in a first cell.

Thus the old cell is referred to as a first cell, e.g. a first cell serving the wireless device 120, and the new cell is referred to as a second cell, e.g. a second cell serving the wireless device 120.

Further, it should be understood that the first and second cells, i.e. the old and new cells, may be the same cell but the may also be different cells.

As will be described in more detail below, positioning assistance data may be valid for multiple cells in an area. Thus, if the wireless device 120 has positioning assistance data valid for a first cell and determines that the positioning assistance data is valid also for a second cell, then the first wireless device 120 does not need to retrieve the content of a positioning SIB broadcasted for the second cell in order to acquire positioning assistance data valid for the second cell. This may be the case, when the first and second cells are overlapping or neighboring cells capable of serving the wireless device 120. However, if the wireless device 120 determines that the positioning assistance data for the first cell is not valid for the second cell, the wireless device 120 needs to retrieve the content of a positioning SIB broadcasted for the second cell in order to acquire positioning assistance data valid for the second cell. This may be the case, when the wireless device 120 has moved to a new position served by the second cell and not by the first cell where the assistance data content may vary because of large geographical separation.

When the positioning assistance data of the one or more positioning SIBs are associated with a respective indication and the wireless device 120 determines whether or not the positioning assistance data of the received one or more positioning SIBs is same by determining the positioning assistance data to be same when being associated with same respective indication.

Thus, the same positioning assistance data may be associated with the same identifier or indication. Therefore, if the wireless device 120 wants to acquire positioning assistance data for the second cell it may first acquire the identifier or indication associated with the positioning assistance data for the second cell and compare the identifier for the second cell with the identifier for the first cell for which the wireless device 120 already has positioning assistance data. If the identifiers for the first and second cells are different, the already acquired positioning assistance data for the first cell is not valid in the second cell and the wireless device 120 will acquire the positioning assistance data for the second cell from the positioning SIB received for the second cell.

In other words, when the positioning assistance data for the second cell is determined to be same as the positioning assistance data for the first cell, the wireless device 120 may consider the positioning assistance data for the first cell to be valid for the second cell, and when the positioning assistance data for the second cell is determined to be different from the positioning assistance data for the first cell, the wireless device 120 acquiring positioning assistance data for the second cell from the received one or more positioning SIBs.

The wireless device 120 may determine its position by taking positioning assistance data comprised in one or more of the positioning system information broadcasts into account in addition to the result of one or more GNSS measurements performed by the wireless device 120.

To perform the method actions e.g. for receiving positioning assistance data, the wireless device 120 comprises the arrangement depicted in **Figure 7**. The wireless device 120 may e.g. comprise **a transmitting unit 701**, **a receiving unit 702**, a **retrieving unit 703**, **a determining unit 704**, **an identifying unit** 705 and **a positioning unit 706.** As previously mentioned the wireless device 120 and the network node 110 are configured to operate in the wireless communications network 100.

The wireless device 120 may be configured to transmit, e.g. by means of the transmitting unit 701, a signal, message or information to one or more nodes operating in the communications network 100. The transmitting unit 701 may be implemented by or arranged in communication with a **processor 708** of the wireless device 120. The processor 708 will be described in more detail below.

The wireless device 120 is configured to receive, e.g. by means of the receiving unit 702, a signal, message or information from one or more nodes operating in the communications network 100.

The receiving unit 702 may be implemented by or arranged in communication with the processor 308.

The wireless device 120 is configured to receive, from the network node 110, scheduling information comprising information about radio resources that are to provide scheduling information of a positioning SIB, which scheduling information is different from scheduling information of non-positioning SIB.

Further, the wireless device 120 is configured to receive, using the radio resources, scheduling information of the positioning SIB from the network node 110.

Furthermore, the wireless device 120 is configured to receive, from the network node 110 and in accordance with the received scheduling information of the positioning SIB, one or more positioning SIBs comprising positioning assistance data.

The wireless device 120 is configured to retrieve or acquire, e.g. by means of the retrieving unit 703, positioning assistance data for a cell from the received one or more positioning SIBs.

The retrieving unit 703 may be implemented by or arranged in communication with the processor 308.

The wireless device 120 is configured to determine, e.g. by means of the determining unit 704, determine whether or not the positioning assistance data of the received one or more positioning SIBs is same in a second cell as in a first cell.

The determining unit 704 may be implemented by or arranged in communication with the processor 308.

When the positioning assistance data for the second cell is determined to be same as the positioning assistance data for the first cell, the wireless device considers the positioning assistance data for the first cell to be valid for the second cell, and when the positioning assistance data for the second cell is determined to be different from the positioning assistance data for the first cell, the wireless device acquires or retrieves positioning assistance data for the second cell from the received one or more positioning SIBs.

The positioning assistance data of the one or more positioning SIBs are associated with a respective indication. The wireless device 120 is configured to determine whether or not the positioning assistance data of the received one or more positioning SIBs is same by further being configured to determine the positioning assistance data to be same when being associated with same respective indication.

The indication is configured to indicate a categorization of the positioning assistance data in dependence of its change rate.

The indication may be configured to indicate a fast-changing positioning SIB comprising fast-changing positioning assistance data and to indicate an update rate corresponding to a SIB periodicity.

For example, the indication may be a value tag indicating at least one out of:
- a change rate of the positioning assistance data;
- a change in the positioning assistance data; and
- a change in an encryption key for the associated positioning SIB.

In some cases, the indication is given by a presence of a value tag in the one or more received pSIBs and the wireless device 120 is configured to determine an update rate of the SIB based on the value tag.

Alternatively, in some cases, the indication is given by an absence of a value tag in the one or more received positioning SIBs and wherein the wireless device 10, 120 is configured to determine the one or more received positioning SIBs to be a fast-changing SIB and determine the update rate of the SIB to be equal to a SIB periodicity.

The wireless device 120 is configured to identify, e.g. by means of the identifying unit 705, a positioning SIB and/or a cell.

The identifying unit 705 may be implemented by or arranged in communication with the processor 308.

The wireless device 120 is configured to positioning, e.g. by means of the positioning unit 706, the wireless device 120. In other words the wireless device 10, 120 is configured to determine its location by means of the positioning unit 706.

The positioning unit 706 may be implemented by or arranged in communication with the processor 308.

Those skilled in the art will also appreciate that the units in the wireless device 120, described above may refer to a combination of analog and digital circuits, and/or one or more processors configured with software and/or firmware, e.g. stored in the wireless device 120, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a System-on-a-Chip (SoC).

The wireless device 120 may comprise **an input and output interface 707** configured to communicate with the network node 110 and the location server 132. The input and output interface may comprise a wireless receiver (not shown) and a wireless transmitter (not shown).

The embodiments herein may be implemented through a respective processor or one or more processors, such as the **processor 708** of a processing circuitry in wireless device 120 depicted in Figure 7, together with respective computer program code for performing the functions and actions of the embodiments herein. The program code mentioned above may also be provided as a computer program product, for instance in the form of a data carrier carrying computer program code for performing the embodiments herein when being loaded into the wireless device 120. One such carrier may be in the form of a CD ROM disc. It is however feasible with other data carriers such as a memory stick. The computer program code may furthermore be provided as pure program code on a server and downloaded to the wireless device 120.

The wireless device 120 may further comprise a **memory 709** comprising one or more memory units. The memory comprises instructions executable by the processor in the wireless device 120.

The memory is arranged to be used to store e.g. data, configurations, and applications to perform the methods herein when being executed in the wireless device 120.

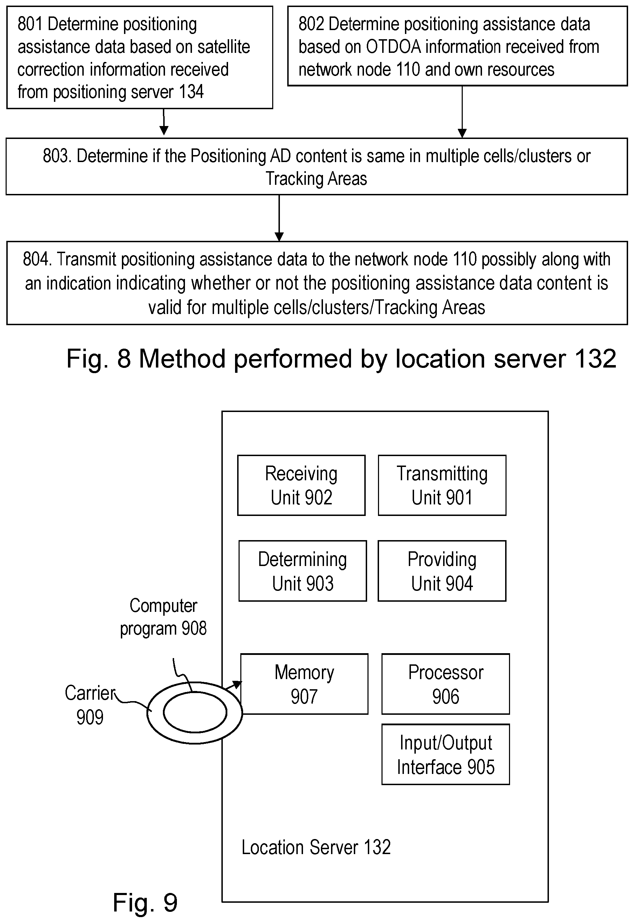

Example embodiments of a flowchart depicting embodiments of **a method performed by the location server 132,** e.g. to provide positioning assistance data, is depicted in **Figure** 8 and will be described more in detail in the following. The method may comprise one or more of the following actions which actions may be taken in any suitable order. Further, it should be understood that one or more actions may be optional and that actions may be combined.

As previously mentioned, the location server 132 and the network node 110 operate in a wireless communications network 100.

In **action 801**, the location server 132 determines positioning assistance data based on satellite correction information received from the positioning server 134. For example, the location server 132 may determine the positioning assistance data based on satellite correction information based upon which correction methods have been used such as SSR, MAC, FKP. The Location server may consider the number of SV (space vehicles) and the RTK Network topology.

In **action 802**, the location server 132 determines positioning assistance data based on OTDOA information received from the network node 110. For example, the location server 132 may determine the positioning assistance data based on OTDOA information by considering the neighbor cell information and their transmission point coordinates. Further, the RTD (Real Time difference) between base station may also be considered.

Thus, the location server 132 may determine positioning assistance data based on satellite correction information received from the positioning server 134 or based on Observed Time Difference Of Arrival (OTDOA) information received from the network node 110.

In **action 803**, the location server 132 determines whether or not the positioning assistance data content is valid for multiple cells/clusters/Tracking Areas. For example, the location server 132 may determine whether or not the positioning assistance data content is valid for multiple cells, clusters and/or tracking areas by analysis the area scope of the determined satellite correction information. Further, locations server may check the update rate of the assistance data content. Some of the contents change rapidly whereas some of the contents remain same for longer duration. Thus, the location server 132 may determine whether or not positioning assistance data is valid. The location server may also determine the update rate(s).

In **action 804**, the location server 132 provides or transmits positioning assistance data to the network node 110 possibly along with an indication indicating to the network node 110 whether or not the positioning assistance data content is valid for multiple cells/clusters/Tracking Areas. The location server 132 may perform the indication to the network node 110 via an LPPa interface. Further, locations server checks the update rate of the assistance data content. Some of the contents change rapidly whereas some of the contents remain same for longer duration Thus, the location server 132 may transmit the positioning assistance data along with the indication indicating to the network node 110 whether or not the positioning assistance data is valid. The location server may also transmit or indicate the update rate(s).

To perform the method actions e.g. for providing positioning assistance data, the location server 132 may comprise the arrangement depicted in **Figure 9****.** The location server 132 may e.g. comprise a **transmitting unit 901**, **a receiving unit 902**, **a determining unit 903**, and **a providing unit 904.**

As previously mentioned the location server 132 and the network node 110 are configured to operate in the wireless communications network 100.

The location server 132 may be configured to transmit, e.g. by means of the transmitting unit 901, a signal, message or information to one or more nodes operating in the communications network 100. The transmitting unit 901 may be implemented by or arranged in communication with **a processor 906** of the location server 132. The processor 906 will be described in more detail below.

The location server 132 is configured to transmit positioning assistance data to the network node 110.

In some embodiments, when the location server 132 has determined whether or not positioning assistance data is valid, the location server 132 may be configured to transmit the positioning assistance data along with an indication indicating to the network node 110 whether or not the positioning assistance data is valid.

The location server 132 is configured to receive, e.g. by means of the receiving unit 902, a signal, message or information from one or more nodes operating in the communications network 100.

The receiving unit 902 may be implemented by or arranged in communication with the processor 906.

The location server 132 is configured to determine, e.g. by means of the determining unit 903, positioning assistance data.

The determining unit 903 may be implemented by or arranged in communication with the processor 906.

The location server 132 is configured to determine positioning assistance data based on satellite correction information received from a positioning server 134 or based on OTDOA information received from the network node 110.

In some embodiments, the location server 132 is configured to determine whether or not positioning assistance data is valid.

Those skilled in the art will also appreciate that the units in the location server 132, described above may refer to a combination of analog and digital circuits, and/or one or more processors configured with software and/or firmware, e.g. stored in the location server 132, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a System-on-a-Chip (SoC).

The location server 132 may comprise an input and output interface 905 configured to communicate with the network node 110, the wireless device 120 and the positioning server 134. The input and output interface may comprise a wireless receiver (not shown) and a wireless transmitter (not shown).

The embodiments herein may be implemented through a respective processor or one or more processors, such as the processor 906 of a processing circuitry in the location server 132 depicted in Figure 9, together with respective computer program code for performing the functions and actions of the embodiments herein. The program code mentioned above may also be provided as a computer program product, for instance in the form of a data carrier carrying computer program code for performing the embodiments herein when being loaded into the location server 132. One such carrier may be in the form of a CD ROM disc. It is however feasible with other data carriers such as a memory stick. The computer program code may furthermore be provided as pure program code on a server and downloaded to the location server 132.

The location server 132 may further comprise a memory 907 comprising one or more memory units. The memory comprises instructions executable by the processor in the location server 132.

The memory is arranged to be used to store e.g. data, configurations, and applications to perform the methods herein when being executed in the location server 132.

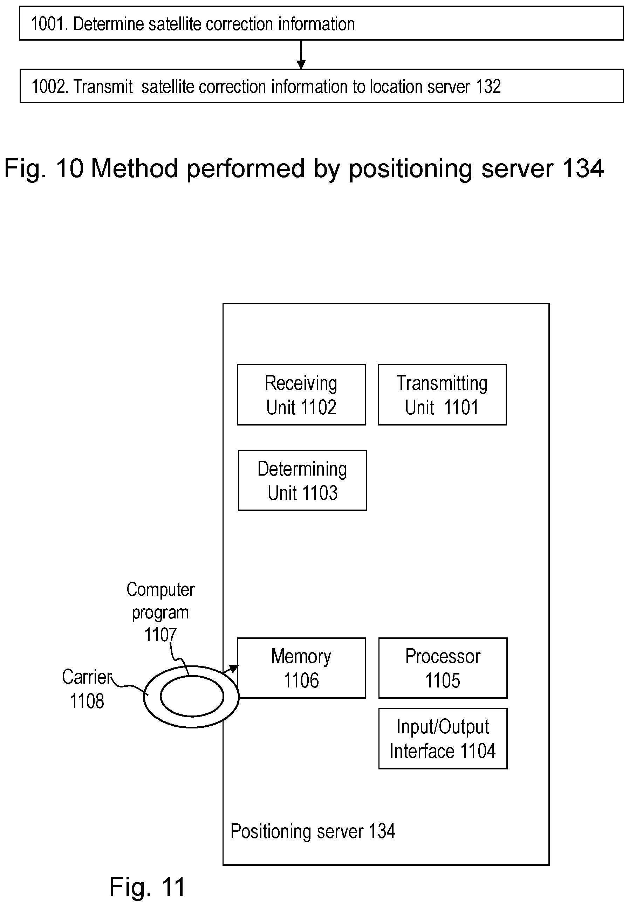

Example embodiments of a flowchart depicting embodiments of **a method performed by the positioning server 134**, e.g. to determine and transmit satellite correction information, is depicted in **Figure 10** and will be described more in detail in the following. The method may comprise one or more of the following actions which actions may be taken in any suitable order. Further, it should be understood that one or more actions may be optional and that actions may be combined.

In **action 1001**, the positioning server 134 determines satellite correction information. For example, the determination may be performed by carrier phase measurements and differential corrections. The reason for this is that the GNSS measurement at the wireless device 120 only considers the code phase measurement. By providing the carrier phase measurement in respect to each satellite and also the correction information due to for example atmospheric conditions, it would be possible for the wireless device 120 to determine a more precise position information based on the received RTK assistance data.

In **action 1002**, the positioning server 134 transmits the satellite correction information to the location server 132.

To perform the method actions e.g. for determining and transmitting satellite correction information, the positioning server 134 may comprise the arrangement depicted in **Figure 11**. The positioning server 134 may e.g. comprise a **transmitting unit 1101**, **a receiving unit 1102**, and **a determining unit 1103.**

Those skilled in the art will also appreciate that the units in the positioning server 134, described above may refer to a combination of analog and digital circuits, and/or one or more processors configured with software and/or firmware, e.g. stored in the positioning server 134, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a System-on-a-Chip (SoC).

The positioning server 134 may comprise **an input and output interface 1104** configured to communicate with the network node 110, the wireless device 120 and the location server 132. The input and output interface may comprise a wireless receiver (not shown) and a wireless transmitter (not shown).

The embodiments herein may be implemented through a respective processor or one or more processors, such as the **processor 1105** of a processing circuitry in the positioning server 134 depicted in Figure 11, together with respective computer program code for performing the functions and actions of the embodiments herein. The program code mentioned above may also be provided as a computer program product, for instance in the form of a data carrier carrying computer program code for performing the embodiments herein when being loaded into the positioning server 134. One such carrier may be in the form of a CD ROM disc. It is however feasible with other data carriers such as a memory stick. The computer program code may furthermore be provided as pure program code on a server and downloaded to the positioning server 134.

The positioning server 134 may further comprise a **memory 1106** comprising one or more memory units. The memory comprises instructions executable by the processor in the positioning server 134.

The memory is arranged to be used to store e.g. data, configurations, and applications to perform the methods herein when being executed in the positioning server 134.

In some embodiments, a respective **computer program 512** comprises instructions, which when executed by the respective at least one processor, cause the at least one processor of the network node 110 to perform one or more of the actions above.

In some embodiments, a respective **computer program 710** comprises instructions, which when executed by the respective at least one processor, cause the at least one processor of the wireless device 120 to perform the actions above.

In some embodiments, a respective **computer program 908** comprises instructions, which when executed by the respective at least one processor, cause the at least one processor of the location server 132 to perform one or more of the actions above.

In some embodiments, a respective **computer program 1107** comprises instructions, which when executed by the respective at least one processor, cause the at least one processor of the positioning server 134 to perform one or more of the actions above.

In some embodiments, a respective **carrier 513, 711, 909, 1108** comprises the respective computer program, wherein the carrier is one of an electronic signal, an optical signal, an electromagnetic signal, a magnetic signal, an electric signal, a radio signal, a microwave signal, or a computer-readable storage medium.

**Below a more detailed description of the positioning assistance data and the positioning SIBs will follow.**

### 5.1 Positioning Assistance Data for System Information Broadcast

RTK is one of the positioning Assistance Data (AD) that needs to be supported in 3GPP Rel-15. This may be divided into two message types; a common message type and a generic message type. Common messages are not associated with a GNSS-ID whereas Generic messages are associated with the GNSS-ID. '

Common messages, e.g. the common assistance data, are:
a) GNSS-RTK-ReferenceStationlnfo
b) GNSS-RTK-CommonObservationlnfo
c) GNSS-RTK-AuxiliaryStationData

The Generic messages, e.g. the generic assistance data, are:
a) GNSS-RTK-Observations
b) GLO-RTK-Biaslnformation for GLONASS
c) GNSS-RTK-MAC-CorrectionDifferences
d) GNSS-RTK-Residuals
e) GNSS-RTK-FKP-Gradients
f) GNSS-SSR-OrbitCorrections
g) GNSS-SSR-ClockCorrections
h) GNSS-SSR-CodeBias

Observed Time Difference of Arrival (OTDOA) specific information (Assistance Data) also needs to be broadcasted as shown in below table.

| | ***assistanceDataElement*** |
|---|---|
| GNSS Common Assistance Data | GNSS-ReferenceTime |
| | GNSS-ReferenceLocation |
| | GNSS-IonosphericModel |
| | GNSS-EarthOrientation Parameters |
| | GNSS-RTK-ReferenceStationInfo |
| | GNSS-RTK-CommonObservationlnfo |
| | GNSS-RTK-AuxiliaryStationData |
| GNSS Generic Assistance Data | G NSS-TimeModel List |
| | GNSS-DifferentialCorrections |
| | GNSS-NavigationModel |
| | GNSS-RealTimelntegrity |
| | GNSS-DataBitAssistance |
| | GNSS-AcquisitionAssistance |
| | GNSS-Almanac |
| | GNSS-UTC-Model |
| | GNSS-AuxiliaryInformation |
| | BDS-DifferentialCorrections |
| | BDS-GridModelParameter |
| | GNSS-RTK-Observations |
| | GLO-RTK-BiasInformation |
| | GNSS-RTK-MAC-Correction Differences |
| | GNSS-RTK-Residuals |
| | GNSS-RTK-FKP-Gradients |
| | GNSS-SSR-OrbitCorrections |
| | GNSS-SSR-ClockCorrections |
| | GNSS-SSR-CodeBias |
| OTDOA Assistance Data | OTDOA UE Assisted |
| | OTDOA UE Based |
| | OTDOA UE Assisted NB |
| | OTDOA UE Based NB |

Considering the above positioning AD, more than 20 new SIB types may have to be defined. Each of the new SIB types may have separate periodicity and thus may need one separate System Information (SI) message. Further, it may be possible to group them also based upon subscription class or based upon periodicity.

### 5.2 Positioning SIBs

In this disclosure, and as previously mentioned, three alternative methods are proposed to define the new positioning SIBs.

Alternative (a) is to modify the SIBs in the legacy approach, while Alternative (b) uses SIB1 and adds one SIB type which has a container characteristic. By the expression "container characteristic" when used in this disclosure is meant that one SIB type may contain/comprise multiple other SIB types. For other SIBs, usually all the broadcast information was packed in one SIB, however, in the positioning case, due to having different types of data and very large size of broadcast information they should be taken as multiple SIBs.

Alternative (c) is creating the positioning system information parallel to the legacy System Information by having a separate positioning SIB branch. All mechanisms use a generic SIB structure to define the new positioning SIBs and define a SIB which comprises the scheduling information of the new SIBs, i.e. the new positioning SIBs.

Below a schematic of each alternative and more details on the solutions are shown, while the next section will provide the detailed information of the signaling supports.

### 5.2.1 Alternative (a) Modify the SIBs in the legacy approach.

In this solution, all positioning assistance data are added as separate SIB segments. However, this may be inefficient as it will require many SIBs. There is a theoretical limitation that at max there may be only 32 different SIB types that may be scheduled, considering that each SIB message may be mapped theoretically to one SI message, which makes it as a bottleneck. Similarly, in legacy the new SIB types and scheduling information are defined in SIB1. It may not be optimal to define so many SIB types in SIB1 and also the new scheduling information as it will cause the SIB1 size to grow. For NB-IoT and MTC devices, it is essential that the SIB1 size is lean, so those wireless devices may acquire the SIB1 faster. Minimizing SIB1 acquisition duration is critical. One more drawback of using the legacy mechanism is that, the new positioning SIBs do not have same periodicity, not the same SI Window length and not the same validity period as the legacy SIBs, thus it does not make more meaning to group them together.

### 5.2.2 Alternative (b) Use SIB1 and add one SIB type having a container characteristic.

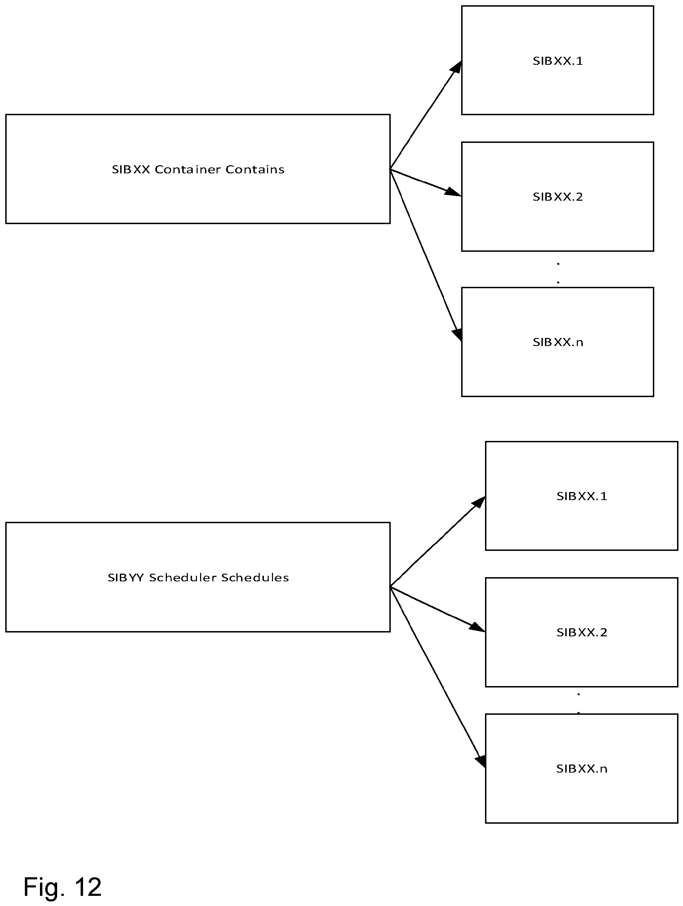

This alternative uses the System Information extension in a unique way such that the new Positioning SIB types and the decoupled Positioning SIB scheduling (i.e. the positioning SIB scheduling is decoupled from the SIB1 legacy SIB scheduling) are defined as new SIB Types. For example, a SIBXX is provided as a kind of container for the various flavors of the Pos-Systemlnformation-r15. The Pos-Systemlnformation-r15 may be seen as the container SIB comprising one or more of the new SIBs, i.e. one or more of the positioning SIBs. It costs only one SIB type, wherein it may branch out in the various new SIBs SIBxx.1-SIBxx.n as schematically shown in **Figure 12** or in the Pos-Systemlnformation-r15 message given in section 5.3.2 below. Thereby, one SIB type is used as a container, and, as illustrated in **Figure 12**, it may branch into a large number of separately scheduled positioning SIB elements.

### 5.2.3 Alternative (c) Create the positioning system information parallel to the legacy System Information by having a separate positioning SIB branch.

This alternative creates the Pos-Systemlnformation-r15 message as a new BCCH-DL-SCH-Message type. This may be done alongside or parallel to the legacy System Information and the legacy SystemlnformationType1 messages. It avoids the need for the SIBXX in the legacy SIB type structure. It also opens up for somewhat modified scheduling rules for this information, compared to the legacy SIB types, which may be an advantage.

Alternatives b and c may use the Generic SIB and SIB containing scheduling info for the Positioning SIBs. These signaling are presented in Sections 5.4 and 5.5 below.

### 5.3 Signaling support

### 5.3.1 Alternative (a) Modify the SIBs in the legacy approach.

### Systemlnformation message

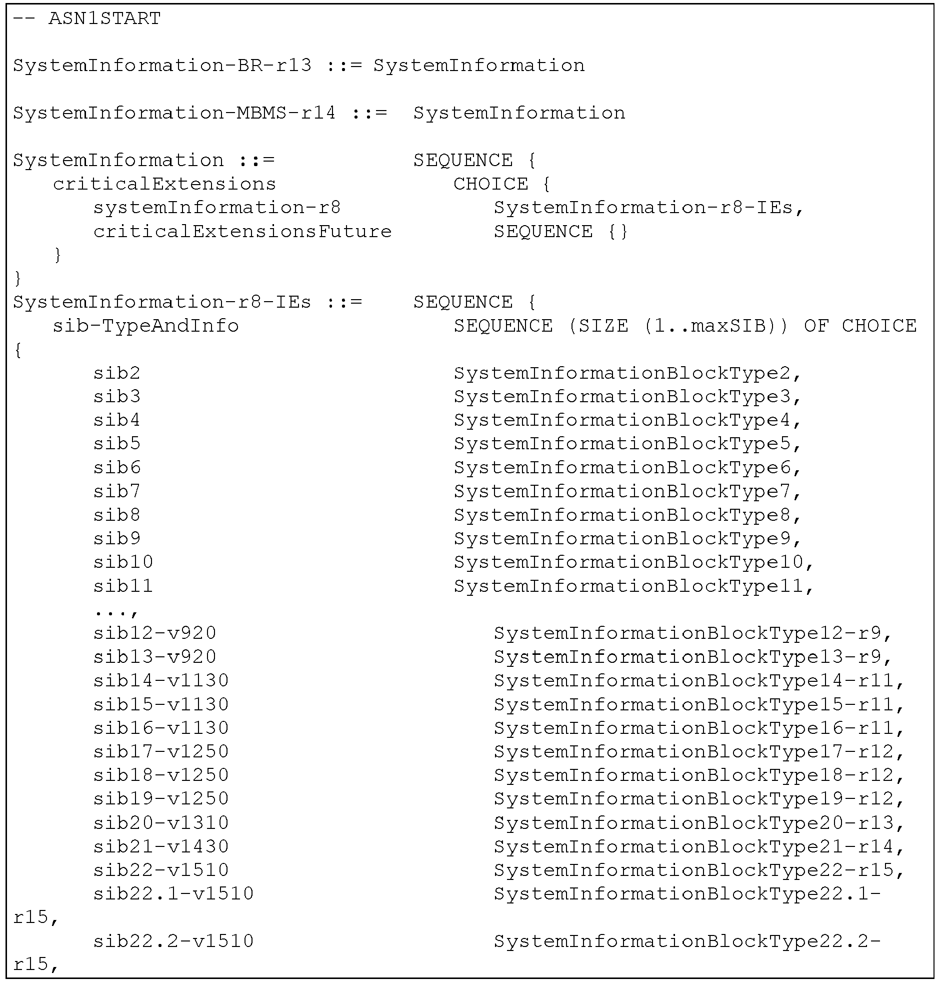

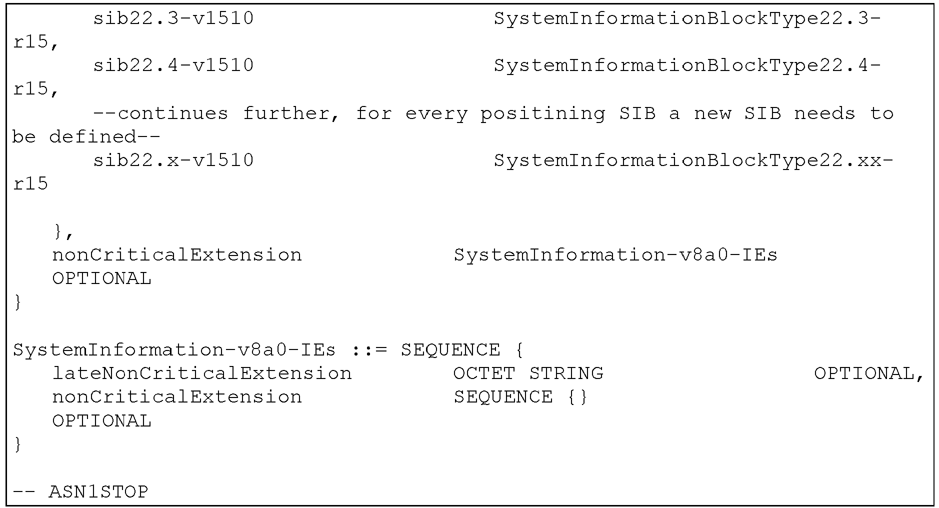

A new SIB type has to be defined in SIB1 so that the new added SIB will be scheduled. Below is the SIB1 impact:

### SystemlnformationBlockType 1 message

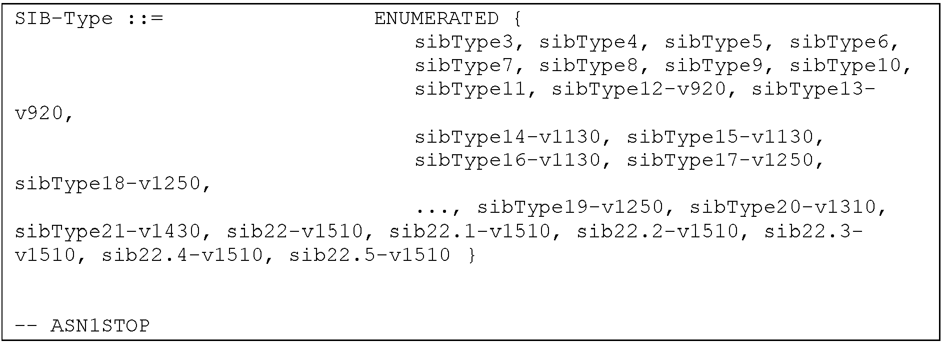

### 5.3.2 Alternative (b) Using SIB1, i.e. use SIB1 and add one SIB type having a container characteristic.

In some embodiments of this method, the legacy SIB may be extended as below to define a new SIB, i.e. the positioning SIB, which will comprise the scheduling information and define the new SIB types.

### Systemlnformation message

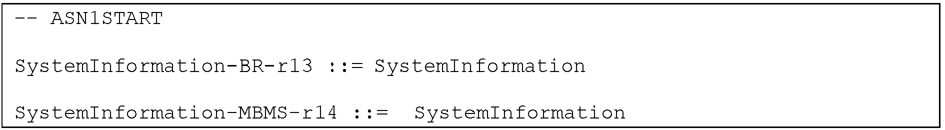

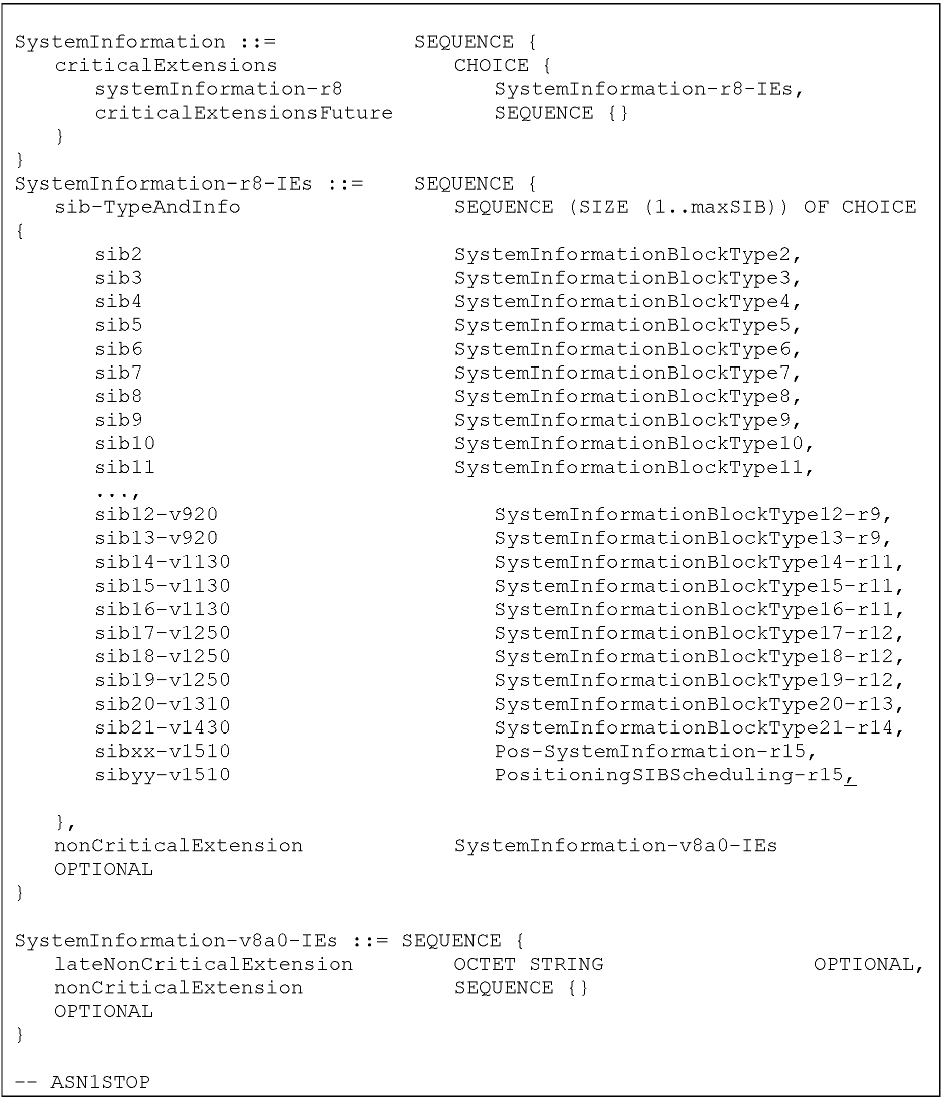

In some embodiments of this method, positioning SIB scheduling is included as one of the SIB types. This acts as an implicit flag that the positioning SIBs are supported. The PositioningSIBScheduling-r15 is defined as a SIB in the legacy structure. It enables the UE to readily find the pieces of positioning information in the new SIB category (the Pos-Systemlnformation-r15). It also serves (implicitly) as the "flag" to tell the wireless device 120, e.g. the UE, that the positioning information is present. The ASN.1 code for the above method for SIB1 impacts are presented below:

### SystemlnformationBlockType 1 message

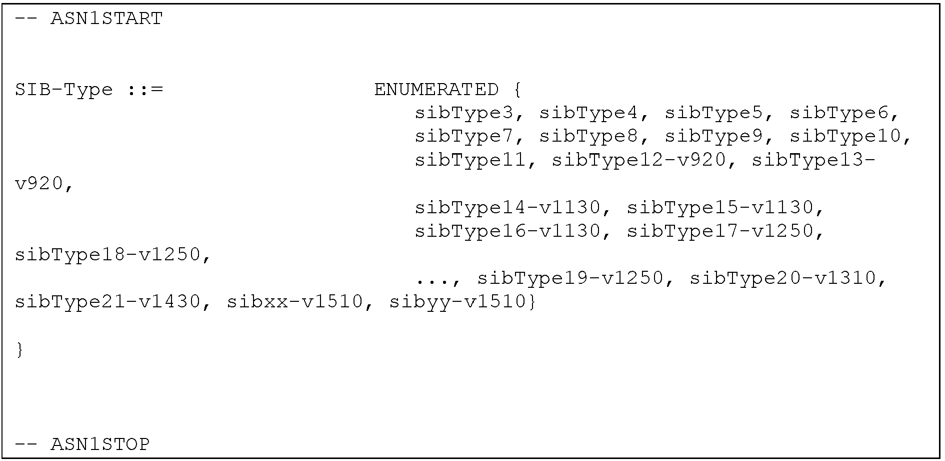

The new Positioning SIB may be defined as below:

### Pos-Systemlnformation-r15 message

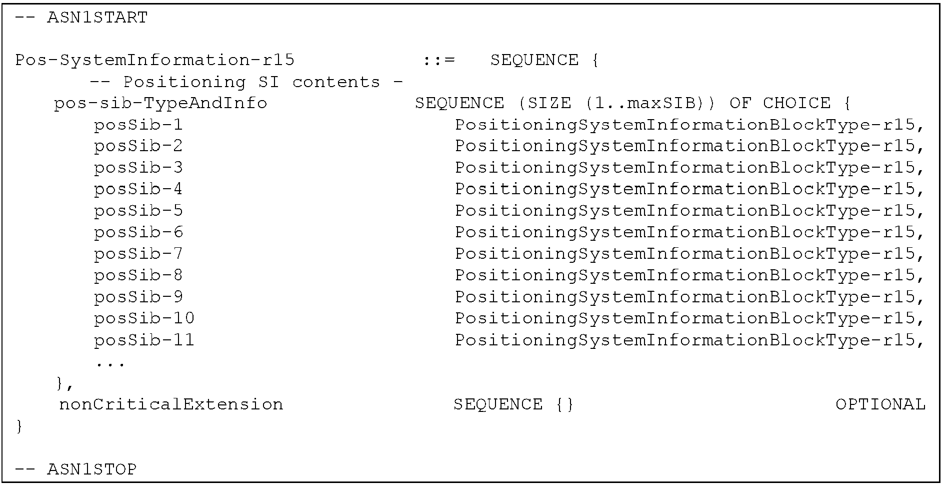

5.3.3 Alternative (c) Separate positioning SIB branch, i.e. create the positioning system information parallel to the legacy System Information by having a separate positioning SIB branch. In some embodiments of this method, an RRC critical extension method is expanded in such a way that it provides the possibility to define a new independent branch for Positioning SIBs as shown below. By the expression RRC critical extension method" when used herein is meant extending the Critical Information which the UE must understand. If the UE fails to decode part of the Critical message, the complete message may be ignored.
- BCCH-DL-SCH-Message
The BCCH-DL-SCH-Message class is the set of RRC messages that may be sent from the E-UTRAN to the UE via DLSCH on the BCCH logical channel.

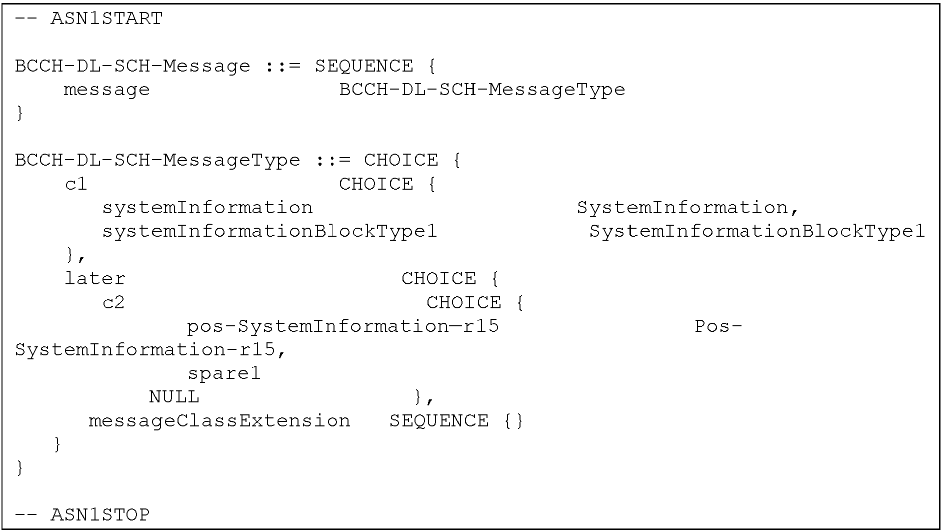

This would then define a new type of system information message for the LPP related info:
*Pos-Systemlnformation-r15 message* 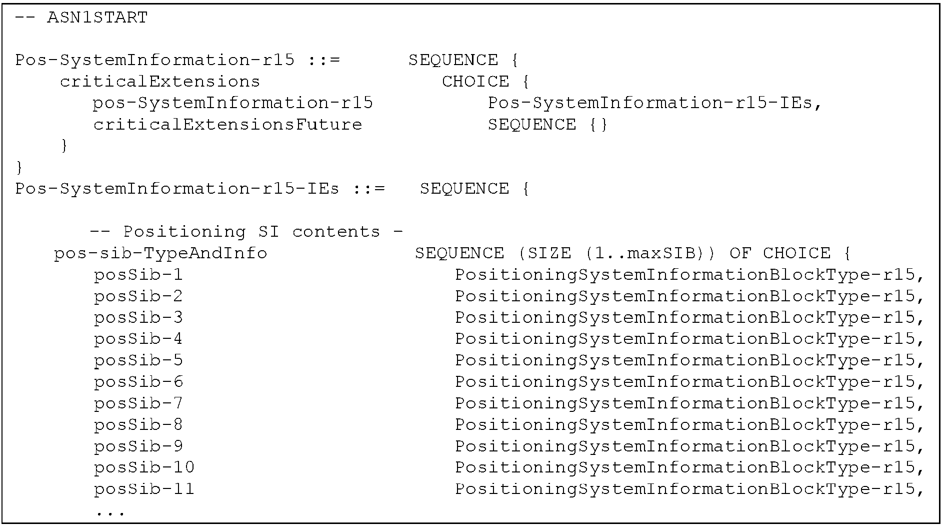 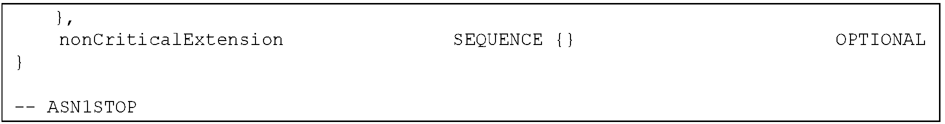 In some embodiments of this alternative, the legacy SIB1 is used to define a new SIB type for scheduling the SIB similar as SIBYY in alternative (b). The SIBYY is the SIB that comprises Scheduling Information for Positioning SIBs.
*Systemlnformation message*

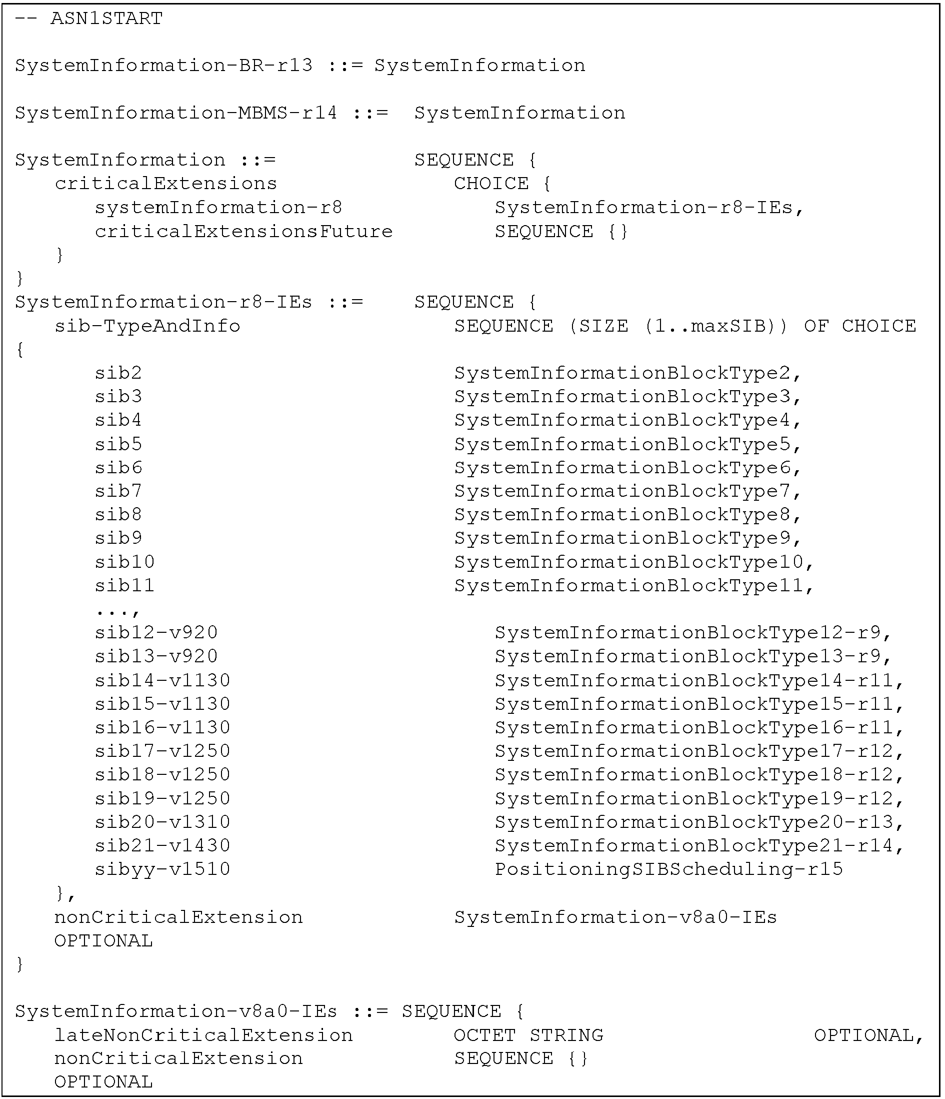

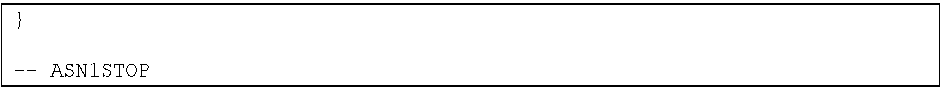

### 5.4 Generic SIB Content

Some embodiments disclosed herein define the new positioning SIB, e.g. a PositioningSystemInformationBlockType-r15, as below:

### PositioningSystemInformationBlockType message

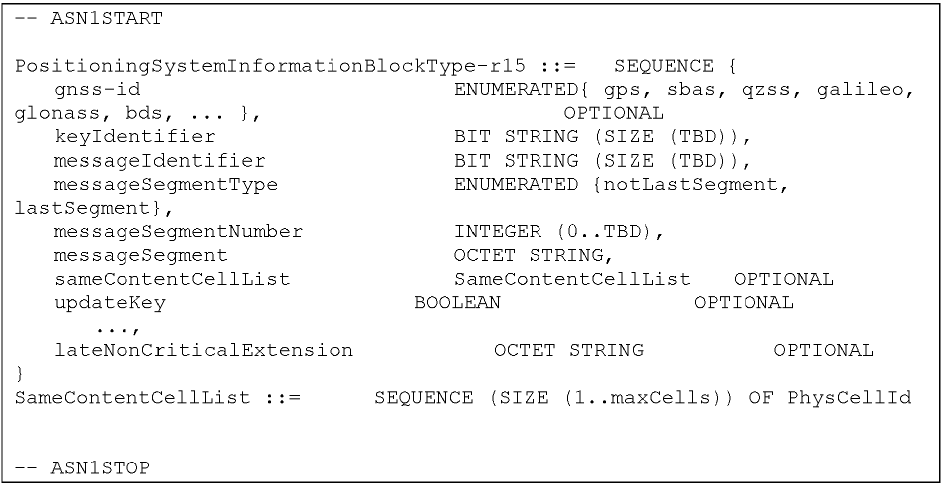

| ***PositioningSystemInformationBlockType* field descriptions** |
|---|
| ***gnss-ID*** |
| This field is used to indicate a specific GNSS. |
| ***keyidentifier*** |
| Identifies the ciphering key that has been used to encrypt/cipher the messageSegment Octet String. |
| ***messageIdentifier*** |
| Identifies the source and type of RTK Assistance Data. |
| ***messageSegment*** |
| Carries a segment of the RTK assistance Data defined in TS 36.355. |
| ***messageSegmentNumber*** |
| Segment number of the RTK Assistance Data message segment contained in the SIB. A segment number of zero corresponds to the first segment, one corresponds to the : second segment, and so on. |
| ***messageSegmentType*** |
| Indicates whether the included RTK Assistance Data message segment is the last segment or not. |
| ***sameContentCellList*** |
| List of cells where the content being broadcast is identical. |

### 5.5 Grouping SIB contents

Some of the positioning AD comprised in the positioning SIB may need to be changed rapidly, e.g. for instance every 1s, whereas some of the contents, i.e. the positioning SIB contents, may be unchanged for days. Some embodiments herein provide the possibility to group the content based upon the update rate. The contents which are fast changing are mapped to one SI message. This SI is exempt from the validity tag.

Similarly, the positioning AD grouping may also be done based upon their size. Smaller size data may be grouped together and transmitted in one SI message.

### 5.6 Positioning SIB scheduling

### PositioningSIBScheduling message

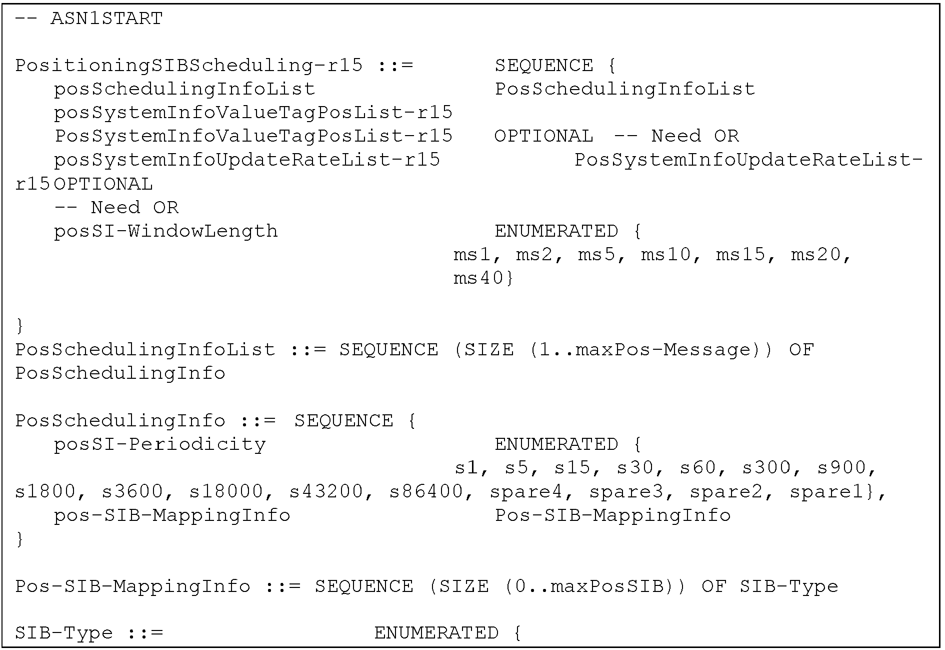

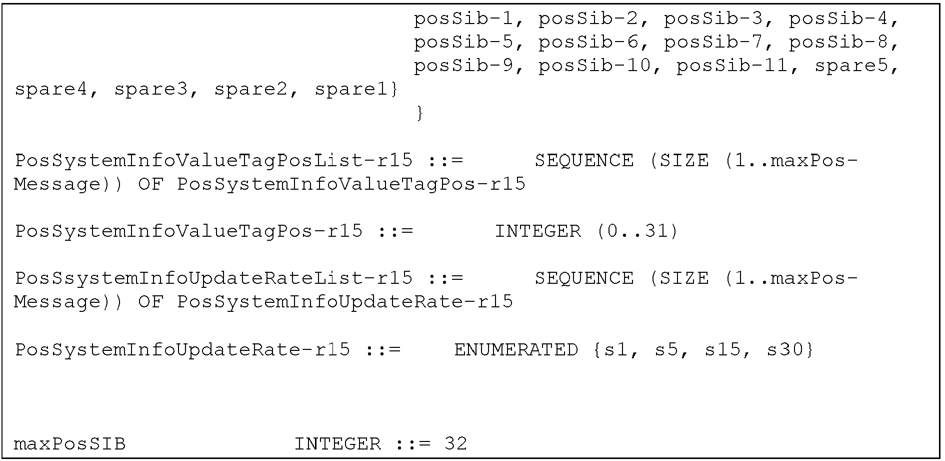

The Positioning SIB periodicity differs from the legacy SIB periodicity. Above SI Periodicity value indicates the difference compared to legacy as the values are large.

A separate system value tag exists for Positioning SIB as indicated in the Information Element (IE) SystemlnfoValueTagPos-r15. Thus, the wireless device 120, e.g. the UE, has to read the new Positioning Scheduling SIB in order to identify whether or not any positioning SIB contents, i.e. any positioning assistance data, have been modified.

The SystemlnfoValueTagPos may be implemented in one of the two ways described below.
a) SystemlnfoValueTag that exists in legacy SIB1 is made void (not applicable) for SIBYY. The SIBYY is the SIB that comprises Scheduling Information for Positioning SIBs. The UE checks periodically the SIBYY. Further, the SIBYY comprises the system value tag for the positioning SIBs.
b) SystemlnfoValueTag that exists in legacy SIB1 is applicable for SIBYY. The network (NW), e.g. the network node 110, updates the SIBYY value tag whenever any of the positioning SIBs contained in SIBXX changes (this info is provided by the location server 132, e.g. the E-SMLC). The wireless device 120, e.g. the UE, reads the SIBYY to identify which Positioning SIBs (SIBxx.x value tag has changed) and reads that particular SIBxx.x. For example, the valueTag may be incremented by one, e.g. by the location server, every time a modified assistance data content is provided. However, the valueTag may be excluded when the broadcast assistance data changes too frequently.

The positioning information, e.g. the positioning assistance data, may be valid for multiple cells in an area. Hence it may be so the same positioning information is valid for adjacent or close-by cells. In some embodiments the network node 110, e.g. an eNB, provides an identifier or an indication associated with positioning information for a first cell. The wireless device 120, e.g. the UE, then acquires the positioning information and the associated identifier or indication for this first cell. If the UE wants to acquire the positioning information for a second cell it may first acquire the identifier or indication associated with the positioning information for that second cell, without necessarily acquiring the positioning information itself. And if the identifier or indication for the second cell is the same as for the positioning information for which the UE already has positioning information, the UE may consider the positioning information acquired for the first cell to be valid in the second cell. If however, the identifier or indication for the second cells positioning information is different than the positioning information which the UE already has, the UE needs to acquire the positioning information for the second cell and it may also store the associated identifier or indication for that acquired positioning information. In case the UE enters a cell not providing an indication or identifier associated with the positioning information, the UE may not be able to conclude that some already acquired positioning information is not valid in this cell, and hence would acquire the positioning information for that cell. The E-SMLC (Location server) has view of the cells and whether the contents that are being broadcasted is same or differs in a geographical area (e.g. cells/cluster). Thus, if certain content would remain same in a geographical area, then the location server 132, e.g. the E-SMLC, may indicate this to the network node 110, e.g. the eNB. The E-SMLC may provide a list of cells where the content is same to the eNB. The eNB may indicate this to the UE via SIB broadcast with the cell Id information. The SIB broadcast example is shown above in Generic SIB content IE SameContentCellList.

In some embodiments, the value tag indicates the encryption key changes, wherein an increase in value tag corresponds to the use of a new encryption key. The wireless device 120, e.g. the UE, typically is aware of the key expiration time and will retrieve a new key before the current key expires. The value tag increase will indicate to the UE that it shall use the new key instead of the old key when deciphering the data. In some embodiments, a specific keyUpdateFlag may be included and upon the presence of such indication, the UE should be aware that a new key should be obtained. An example is shown above in the Generic SIB content with field updateKey.

The positioning SIBs may optionally be ciphered, and the ciphering keys are distributed via the Tracking Area (TA) update procedure. This means that the wireless device 120, e.g. the UE, will retrieve new ciphering keys when moving out of the current TA list.

An alternate embodiment is to consider an enumerable "SIB-Group-Id" per SIB that groups all cells within the TA list that broadcast the same content.

Thus, various categories of the combination of SIB content validity (SIB-Group-Id) and value tags as below may be defined. The below gives four combinations for the positioning scheduling info:
- No value tag, no SIB-Group-Id, every SIB is considered to contain new info.
- No value tag, SIB-Group-Id. every SIB transmission from a cell is considered new, while a SIB transmission from a different cell with the same SIB-Group-Id within a time window is also transmitting the same content.
- Value tag, no SIB-Group-Id, all cells within the TA list are considered to provide the same info, value tag indicates when changed.
- Value tag, SIB-Group-Id, all cells within the TA list with the same SIB-Group-Id are considered to provide the same info, value tag indicates when changed.

For the last two options, the value tag needs to be synchronized among cells which may be difficult. Thus, another alternative may be that SIB-Group-Id will be updated each time a new set of information is distributed. It would serve both purposes, to identify the area where the information is the same, and to indicate when the set of information changes.

### 5.7 Supporting Fast changing SIB

In a legacy communications network, Paging is used to notify change in system information broadcast content. For the RTK AD, some of the SIB content may need to be updated very rapidly, for instance every 1s. In such case, using Paging would not be efficient as it will increase the Paging load and would require high Paging capacity dimensioning in the communications network.

In some embodiments, a tag is introduced in the SIB, i.e. the positioning SIB. The tag will serve to inform the wireless device 120, e.g. the UE, that the SIB is a fast-changing SIB with additional information of the update rate. An example of such an embodiment is provided via ASN.1 example in chapter 5.6.

In some embodiments, the absence of a validity tag may act as an indicator that the SIB is fast changing SIB. The next transmission of the updated fast transmission SIB would occur at the next periodical transmission of the SIB.

### 5.9 UE Behavior

The UE behavior in terms of one or more of 1)-3) below will now be described:

### 1) value tag present or absent

When value tag is present, the wireless device 120, e.g. the UE, will read the value tag and compare the read value tag with the stored one to identify if the content has changed or not. If it differs, UE will retrieve the SIB content, i.e. the positioning assistance data.

When value tag is absent, UE will assume that this SIB is a fast changing SIB and its validity duration is basically equal to the time interval for next SIB transmission (e.g. equal to the SIB periodicity).

### 2) SIB-group-id/cell list present or absent

When the wireless device 120, e.g. the UE, has moved to a new cell, it will verify if the content of the SIB remains same or differs in the new cell. Depending upon that UE will opt to retrieve the SIB content or not. For example, if the content of the SIB is determined to differ in the new cell, the wireless device 120 will retrieve the SIB content. As previously mentioned, the positioning SIB comprises the positioning assistance data. Thus, when the positioning assistance data are determined to be different, the UE will retrieve positioning assistance data for the received positioning SIBs.

### 3) Same GNSS ID or Different GNSS ID as compared to previously stored GNSS ID

The wireless device 120, e.g. the UE, should opt to retrieve the SIB content based upon GNSS ID. If GNSS ID differs from the previously stored GNSS ID, then the UE retrieves the information and stores it in addition to the currently stored information, considering the new information as an extension to the stored information. If the GNSS ID is the same, then the UE retrieves the information and replaces the currently stored information associated to the specific GNSS ID.

### 5.10 New Enhanced SIB scheduling

Current SIB scheduling limits the maximum number of SIB types that may be defined is 32. Since each SIB type theoretically may be mapped to one SI. It is not possible to schedule more than 32 SI simultaneously. One of the solutions to overcome this is to create a separate scheduling instance as shown in above embodiments with a new positioning SIB scheduling.

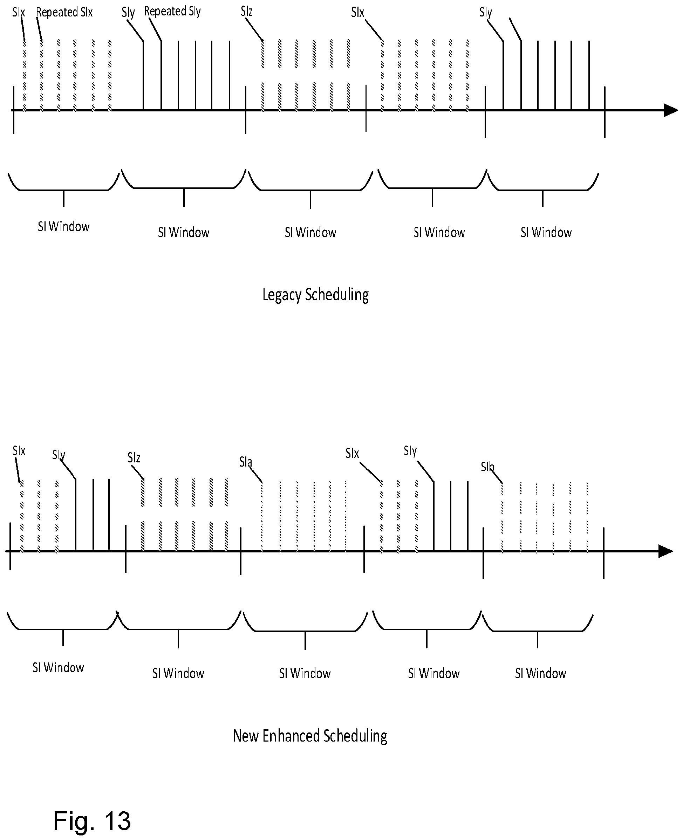

Another solution is to share the scheduling resource among different SI, provided they have the same periodicity. In **Figure 13**, the Legacy Scheduling depicts the legacy SIB scheduling which schedules one SI message per SI window. Three SI messages are shown Six, Sly and Slz. The SI messages Six and Sly are repeated and they have the same periodicity.

In the New Enhanced Scheduling of Figure 13, the scheduling SI window has been shared by UEs with same periodicity. Thus, the SI messages Six and Sly share the resource. This allows two other SI messages (Sla and Slb) to be scheduled. With this scheme, it will be possible to accommodate more SI messages in the same scheduler.

### Further Extensions and Variations

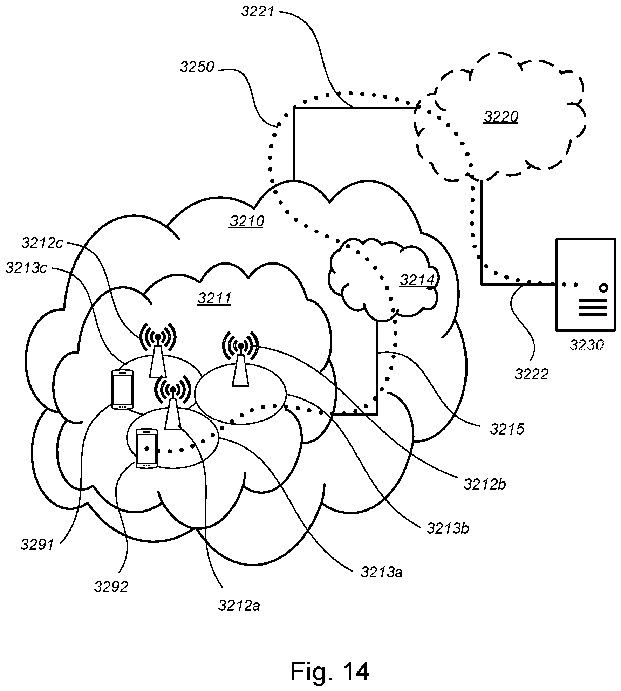

With reference to **Figure 14**, in accordance with an embodiment, a communication system includes a telecommunication network 3210 such as the wireless communications network 100, e.g. a WLAN, such as a 3GPP-type cellular network, which comprises an access network 3211, such as a radio access network, and a core network 3214. The access network 3211 comprises a plurality of base stations 3212a, 3212b, 3212c, such as the network node 110, 130, access nodes, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) e.g. the wireless device 120 such as a Non-AP STA 3291 located in coverage area 3213c is configured to wirelessly connect to, or be paged by, the corresponding base station 3212c. A second UE 3292 e.g. the wireless device 122 such as a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

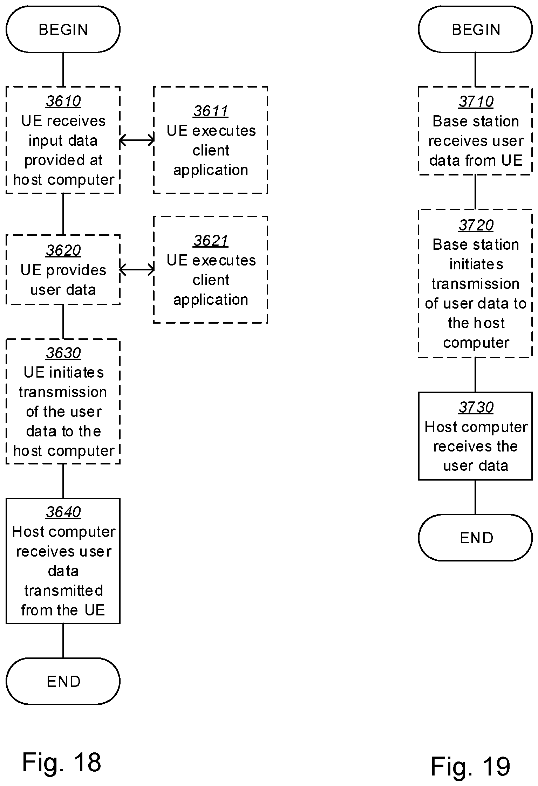

The communication system of Figure 18 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

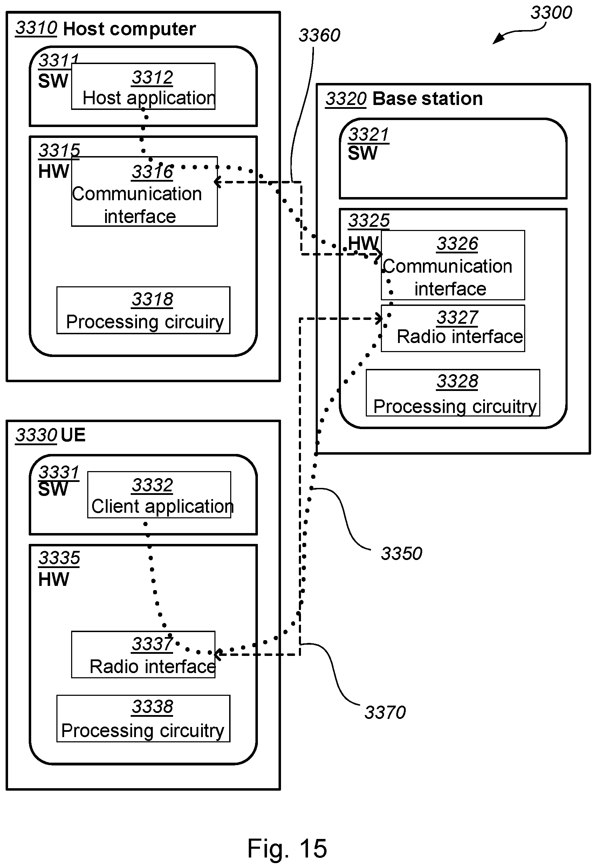

Example implementations, in accordance with an embodiment, of the UE, base station and host computer discussed in the preceding paragraphs will now be described with reference to Figure 15. In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 15) served by the base station 3320. The communication interface 3326 may be configured to facilitate a connection 3360 to the host computer 3310. The connection 3360 may be direct or it may pass through a core network (not shown in Figure 15) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Figure 15 may be identical to the host computer 3230, one of the base stations 3212a, 3212b, 3212c and one of the UEs 3291, 3292 of Figure 14, respectively. This is to say, the inner workings of these entities may be as shown in Figure 15 and independently, the surrounding network topology may be that of Figure 14.

In Figure 15, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve e.g. one or more out of: data rate, latency, power consumption and thereby provide benefits such as one or more out of reduced user waiting time, relaxed restriction on file size, better responsiveness, extended battery lifetime.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

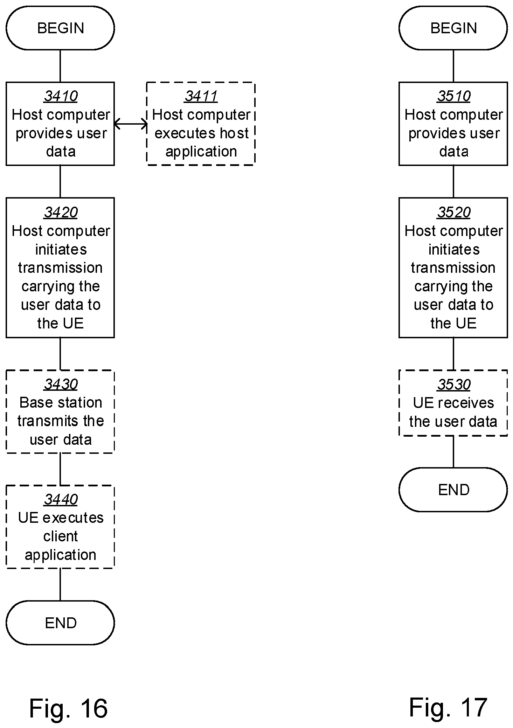

Figures 14 and 15 and the corresponding text are about a downstream aspect of the radio-related invention, while figures 16 and 17 and the corresponding text discuss an upstream aspect.

FIGURE 16 is a flowchart illustrating a method implemented in a communication system, in accordance with one embodiment. The communication system includes a host computer, a base station such as a AP STA, and a UE such as a Non-AP STA which may be those described with reference to Figures 14 and 15. For simplicity of the present disclosure, only drawing references to Figure 16 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

FIGURE 17 is a flowchart illustrating a method implemented in a communication system, in accordance with one embodiment. The communication system includes a host computer, a base station such as a AP STA, and a UE such as a Non-AP STA which may be those described with reference to Figures 14 and 15. For simplicity of the present disclosure, only drawing references to Figure 17 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

FIGURE 18 is a flowchart illustrating a method implemented in a communication system, in accordance with one embodiment. The communication system includes a host computer, a base station such as a AP STA, and a UE such as a Non-AP STA which may be those described with reference to Figures 14 and 15. For simplicity of the present disclosure, only drawing references to Figure 18 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

FIGURE 19 is a flowchart illustrating a method implemented in a communication system, in accordance with one embodiment. The communication system includes a host computer, a base station such as a AP STA, and a UE such as a Non-AP STA which may be those described with reference to Figures 14 and 15. For simplicity of the present disclosure, only drawing references to Figure 19 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

When using the word "comprise" or "comprising" it shall be interpreted as non-limiting, i.e. meaning "consist at least of".

| Abbreviation | Explanation |
|---|---|
| RTK | Real Time Kinematics |
| AD | Assistance Data |
| SIB | System Information Broadcast |
| RRC | Radio Resource Control |
| GPS | Global Positioning System |
| GNSS | Global Navigation Satellite System |

## Claims

1. A method performed by a wireless device (10, 120) for receiving positioning assistance data from a network node (110), wherein the wireless device (10, 120) and the network node (110) operate in a wireless communications network (100), and wherein the method comprises:
- *receiving (602),* from the network node (110), scheduling information comprising information about radio resources that are to provide scheduling information of a positioning System Information Broadcast, SIB, which received scheduling information is different from scheduling information of non-positioning SIB;
- using the radio resources for *receiving (603),* from the network node (110), scheduling information of the positioning SIB; and
- *receiving (604),* from the network node (110) and in accordance with the received scheduling information of the positioning SIB, one or more positioning SIBs comprising positioning assistance data;
- *determining* (605) whether or not the positioning assistance data of the received one or more positioning SIBs is same in a second cell as in a first cell, wherein the positioning assistance data of the one or more positioning SIBs are associated with a respective indication, which indicates a categorization of the positioning assistance data in dependence of its change rate, and wherein the *determining (605)* of whether or not the positioning assistance data of the received one or more positioning SIBs is same comprises determining the positioning assistance data to be same when being associated with same respective indication.

2. The method according to claim 1, wherein the indication indicates a fast-changing positioning SIB comprising fast-changing positioning assistance data and indicates an update rate corresponding to a SIB periodicity.

3. A wireless device (120) for receiving positioning assistance data from a network node (110), wherein the wireless device (120) and the network node (110) are configured to operate in a wireless communications network (100), and wherein the wireless device (120) is configured to:
- receive, from the network node (110), scheduling information comprising information about radio resources that are to provide scheduling information of a positioning System Information Broadcast, SIB, which scheduling information is different from scheduling information of non-positioning SIB;
- receive, using the radio resources, scheduling information of the positioning SIB from the network node (110); and
- receive, from the network node (110) and in accordance with the received scheduling information of the positioning SIB, one or more positioning SIBs comprising positioning assistance data; and
- determine whether or not the positioning assistance data of the received one or more positioning SIBs is same in a second cell as in a first cell, wherein the positioning assistance data of the one or more positioning SIBs are associated with a respective indication, which is configured to indicate a categorization of the positioning assistance data in dependence of its change rate, and wherein the wireless device (120) is configured to determine whether or not the positioning assistance data of the received one or more positioning SIBs is same by further being configured to:
- determine the positioning assistance data to be same when being associated with same respective indication.

4. The wireless device (120) according to claim 3, wherein the indication is configured to indicate a fast-changing positioning SIB comprising fast-changing positioning assistance data and to indicate an update rate corresponding to a SIB periodicity.

## Patentansprüche

1. Verfahren, das von einer drahtlosen Vorrichtung (10, 120) durchgeführt wird, zum Empfang von Positionsbestimmungshilfsdaten von einem Netzwerkknoten (110), wobei die drahtlose Vorrichtung (10, 120) und der Netzwerkknoten (110) in einem drahtlosen Kommunikationsnetzwerk (100) operieren, und das Verfahren umfasst:
- Empfangen (602) von Dispositionsinformationen vom Netzwerkknoten (110), die Informationen über Funkressourcen umfassen, die Dispositionsinformationen einer Positionsbestimmungs-Systeminformationsrundsendung, SIB, bereitstellen sollen, wobei die empfangenen Dispositionsinformationen sich von Dispositionsinformationen einer Nicht-Positionsbestimmungs-SIB unterscheiden;
- Verwenden der Funkressourcen zum Empfangen (603) von Dispositionsinformationen der Positionsbestimmungs-SIB vom Netzwerkknoten (110); und
- Empfangen (604) einer oder mehrerer Positionsbestimmungs-SIBs mit Positionsbestimmungshilfsdaten vom Netzwerkknoten (110) und gemäß den empfangenen Dispositionsinformationen der Positionsbestimmungs-SIB;
- Bestimmen (605), ob die Positionsbestimmungshilfsdaten der einen oder der mehreren empfangenen Positionsbestimmungs-SIBs in einer zweiten Zelle gleich wie in einer ersten Zelle sind oder nicht, wobei die Positionsbestimmungshilfsdaten der einen oder der mehreren Positionsbestimmungs-SIBs mit einer jeweiligen Angabe assoziiert sind, die eine Kategorisierung der Positionsbestimmungshilfsdaten in Abhängigkeit von ihrer Änderungsrate angibt, und wobei das Bestimmen (605), ob die Positionsbestimmungshilfsdaten der einen oder der mehreren empfangenen Positionsbestimmungs-SIBs gleich sind oder nicht, ein Bestimmen umfasst, dass die Positionsbestimmungshilfsdaten gleich sind, wenn sie mit der gleichen jeweiligen Angabe assoziiert sind.

2. Verfahren nach Anspruch 1, wobei die Angabe eine sich schnell ändernde Positionsbestimmungs-SIB angibt, die sich schnell ändernde Positionsbestimmungshilfsdaten umfasst, und eine Aktualisierungsrate angibt, die einer SIB-Periodizität entspricht.

3. Drahtlose Vorrichtung (120) zum Empfangen von Positionsbestimmungshilfsdaten von einem Netzwerkknoten (110), wobei die drahtlose Vorrichtung (120) und der Netzwerkknoten (110) für Betrieb in einem drahtlosen Kommunikationsnetzwerk (100) konfiguriert sind, und die drahtlose Vorrichtung (120) konfiguriert ist zum:
- Empfangen von Dispositionsinformationen vom Netzwerkknoten (110), die Informationen über Funkressourcen umfassen, die Dispositionsinformationen einer Positionsbestimmungs-Systeminformationsrundsendung, SIB, bereitstellen sollen, wobei die Dispositionsinformationen sich von Dispositionsinformationen einer Nicht-Positionsbestimmungs-SIB unterscheiden;
- Empfangen von Dispositionsinformationen der Positionsbestimmungs-SIB vom Netzwerkknoten (110) unter Verwendung der Funkressourcen; und
- Empfangen einer oder mehrerer Positionsbestimmungs-SIBs mit Positionsbestimmungshilfsdaten vom Netzwerkknoten (110) und gemäß den empfangenen Dispositionsinformationen der Positionsbestimmungs-SIB; und
- Bestimmen, ob die Positionsbestimmungshilfsdaten der einen oder der mehreren empfangenen Positionsbestimmungs-SIBs in einer zweiten Zelle gleich wie in einer ersten Zelle sind oder nicht, wobei die Positionsbestimmungshilfsdaten der einen oder der mehreren Positionsbestimmungs-SIBs mit einer jeweiligen Angabe assoziiert sind, die so konfiguriert ist, dass sie eine Kategorisierung der Positionsbestimmungshilfsdaten in Abhängigkeit von ihrer Änderungsrate angibt, und wobei die drahtlose Vorrichtung (120) so konfiguriert ist, dass sie bestimmt, ob die Positionsbestimmungshilfsdaten der einen oder der mehreren empfangenen Positionsbestimmungs-SIBs gleich sind oder nicht, indem sie ferner konfiguriert ist zum:
- Bestimmen, dass die Positionsbestimmungshilfsdaten gleich sind, wenn sie mit der gleichen jeweiligen Angabe assoziiert sind.

4. Drahtlose Vorrichtung (120) nach Anspruch 3, wobei die Angabe so konfiguriert ist, dass sie eine sich schnell ändernde Positionsbestimmungs-SIB angibt, die sich schnell ändernde Positionsbestimmungshilfsdaten umfasst, und eine Aktualisierungsrate angibt, die einer SIB-Periodizität entspricht.

## Revendications

1. Procédé réalisé par un dispositif sans fil (10, 120) pour recevoir des données d'aide au positionnement depuis un noeud de réseau (110), dans lequel le dispositif sans fil (10, 120) et le noeud de réseau (110) fonctionnent dans un réseau de communication sans fil (100), et dans lequel le procédé comprend :
- la réception (602), depuis le noeud de réseau (110), d'informations d'ordonnancement comprenant des informations relatives à des ressources radio qui doivent fournir des informations d'ordonnancement d'une diffusion d'informations de système, SIB, de positionnement, les informations d'ordonnancement reçues étant différentes des informations d'ordonnancement de SIB de non-positionnement ;
- l'utilisation des ressources radio pour recevoir (603), depuis le noeud de réseau (110), des informations d'ordonnancement de la SIB de positionnement ; et
- la réception (604), depuis le noeud de réseau (110) et en fonction des informations d'ordonnancement reçues de la SIB de positionnement, d'une ou plusieurs SIB de positionnement comprenant des données d'aide au positionnement ;
- la détermination (605) si les données d'aide au positionnement des une ou plusieurs SIB de positionnement reçues sont ou non les mêmes dans une deuxième cellule que dans une première cellule, dans lequel les données d'aide au positionnement des une ou plusieurs SIB de positionnement sont associées à une indication respective, qui indique une catégorisation des données d'aide au positionnement en fonction de leur taux de changement, et dans lequel la détermination (605) si les données d'aide au positionnement des une ou plusieurs SIB de positionnement reçues sont ou non les mêmes comprend la détermination que les données d'aide au positionnement sont les mêmes lorsqu'elles sont associées à la même indication respective.

2. Procédé selon la revendication 1, dans lequel l'indication indique une SIB de positionnement à changement rapide comprenant des données d'aide au positionnement à changement rapide et indique un taux de mise à jour correspondant à une périodicité de SIB.

3. Dispositif sans fil (120) pour recevoir des données d'aide au positionnement depuis un noeud de réseau (110), dans lequel le dispositif sans fil (120) et le noeud de réseau (110) sont configurés pour fonctionner dans un réseau de communication sans fil (100), et dans lequel le dispositif sans fil (120) est configuré pour :
- recevoir, depuis le noeud de réseau (110), des informations d'ordonnancement comprenant des informations relatives à des ressources radio qui doivent fournir des informations d'ordonnancement d'une diffusion d'informations de système, SIB, de positionnement, les informations d'ordonnancement reçues étant différentes des informations d'ordonnancement de SIB de non-positionnement ;
- recevoir, en utilisant les ressources radio, des informations d'ordonnancement de la SIB de positionnement depuis le noeud de réseau (110) ; et
- recevoir, depuis le noeud de réseau (110) et en fonction des informations d'ordonnancement reçues de la SIB de positionnement, une ou plusieurs SIB de positionnement comprenant des données d'aide au positionnement ; et
- déterminer si les données d'aide au positionnement des une ou plusieurs SIB de positionnement reçues sont ou non les mêmes dans une deuxième cellule que dans une première cellule, dans lequel les données d'aide au positionnement des une ou plusieurs SIB de positionnement sont associées à une indication respective, qui est configurée pour indiquer une catégorisation des données d'aide au positionnement en fonction de leur taux de changement, et dans lequel le dispositif sans fil (120) est configuré pour déterminer si les données d'aide au positionnement des une ou plusieurs SIB de positionnement reçues sont ou non les mêmes en étant en outre configuré pour :
- déterminer que les données d'aide au positionnement sont les mêmes lorsqu'elles sont associées à la même indication respective.

4. Dispositif sans fil (120) selon la revendication 3, dans lequel l'indication est configurée pour indiquer une SIB de positionnement à changement rapide comprenant des données d'aide au positionnement à changement rapide et pour indiquer un taux de mise à jour correspondant à une périodicité de SIB.
